(19) Europäisches Patentamt
European Patent Office
Office européen des brevets

(11) **EP 3 849 108 A1**

(12) **EUROPEAN PATENT APPLICATION**

(43) Date of publication:
**14.07.2021 Bulletin 2021/28**

(51) Int Cl.:
*H04B 17/391* (2015.01)   *H04B 17/17* (2015.01)
*H04B 17/10* (2015.01)   *H04W 24/00* (2009.01)
*G06N 3/08* (2006.01)   *H04L 25/02* (2006.01)

(21) Application number: **21150647.2**

(22) Date of filing: **08.01.2021**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
**KH MA MD TN**

(30) Priority: **10.01.2020 FI 20205020
17.01.2020 FI 20205052**

(71) Applicant: **Nokia Technologies Oy
02610 Espoo (FI)**

(72) Inventors:
• **DHERE, Amol
9260 Gistrup (DK)**
• **RYSGAARD, Bent Henneberg
9220 Aalborg (DK)**

• **SABOURI-SICHANI, Faranaz
9220 Aalborg (DK)**
• **KOLDING, Troels Emil
9270 Klarup (DK)**
• **POCOVI, Guillermo
9000 Aalborg (DK)**
• **JACOBSEN, Thomas Haaning
9400 Nørresundby (DK)**
• **OLESEN, Poul
9530 Støvring (DK)**
• **HVIID, Jan Torst
9270 Klarup (DK)**
• **BUTHLER, Jakob Lindbjerg
9000 Aalborg (DK)**

(74) Representative: **Nokia EPO representatives
Nokia Technologies Oy
Karakaari 7
02610 Espoo (FI)**

(54) **APPARATUS, METHOD, AND SYSTEM FOR PROVIDING DEVICE HEALTH ESTIMATION**

(57) An approach is provided for device health estimation. The approach, for example, involves monitoring one or more health parameter measurements associated with a device (e.g., an Internet of Things (IoT) device equipped with one or more User Equipment (UE) devices). The approach also involves processing the health parameter measurements using a machine learning model to predict an estimated lifetime of a subsystem of the device and/or an estimated time to failure of the device. The approach then involves providing the estimated lifetime and/or the estimated time to failure as an output. In one embodiment, the approach further involves determining an adjustment of a function of the device and/or another device that interacts with the device based on the estimated lifetime and/or the estimated time to failure.

FIG. 4

EP 3 849 108 A1

**Description**

BACKGROUND

Wireless communications networks (e.g., 5G New Radio (5G NR)) are enabling the widespread deployment of communications devices (e.g., Internet of Things (IoT) devices equipped with one or more User Equipment (UE) devices and/or hardware (HW) components/devices) across a variety of use cases (e.g., industrial, agricultural, consumer, home, etc.). Many of these use cases (e.g., remote monitoring of industrial processes) require that the devices have high reliability and availability, particularly when the devices are deployed in remote locations or locations where it may difficult and expensive to provide regular maintenance or service. As a result, device manufacturers and related service providers face significant technical challenges to estimating the health and functioning status of these devices to minimize the costs associated with maintaining or servicing the devices and related systems.

SOME EXAMPLE EMBODIMENTS

Therefore, there is a need for providing health estimations of communications-capable devices and/or potential correction actions or adjustments based on the health estimations.

According to one embodiment, an apparatus comprises at least one processor, and at least one memory including computer program code for one or more computer programs, the at least one memory and the computer program code configured to, with the at least one processor, cause, at least in part, the apparatus to monitor one or more health parameter measurements associated with at least one device (e.g., an IoT device equipped with one or more UEs). The apparatus is also caused to process the one or more health parameter measurements using at least one machine learning model to predict an estimated lifetime of at least one subsystem of the at least one device, an estimated time to failure of the at least one device, or a combination thereof. The apparatus is further caused to provide the estimated lifetime, the estimated time to failure, or a combination thereof as an output. In one embodiment, the apparatus is further caused to determine an adjustment of at least one function of the at least one device, at least one other device that interacts with the at least one device, or a combination thereof based on the estimated lifetime, the estimated time to failure, or a combination thereof.

According to another embodiment, a method comprises monitoring one or more health parameter measurements associated with at least one device (e.g., an IoT device equipped with one or more UEs). The method also comprises processing the one or more health parameter measurements using at least one machine learning model to predict an estimated lifetime of at least one subsystem of the at least one device, an estimated time to failure of the at least one device, or a combination thereof. The method further comprises providing the estimated lifetime, the estimated time to failure, or a combination thereof as an output. In one embodiment, the method further comprises determining an adjustment of at least one function of the at least one device, at least one other device that interacts with the at least one device, or a combination thereof based on the estimated lifetime, the estimated time to failure, or a combination thereof.

According to another embodiment, a non-transitory computer-readable storage medium carries one or more sequences of one or more instructions which, when executed by one or more processors, cause, at least in part, an apparatus to monitor one or more health parameter measurements associated with at least one device (e.g., an IoT device equipped with one or more UEs). The apparatus is also caused to process the one or more health parameter measurements using at least one machine learning model to predict an estimated lifetime of at least one subsystem of the at least one device, an estimated time to failure of the at least one device, or a combination thereof. The apparatus is further caused to provide the estimated lifetime, the estimated time to failure, or a combination thereof as an output. In one embodiment, the apparatus is further caused to determine an adjustment of at least one function of the at least one device, at least one other device that interacts with the at least one device, or a combination thereof based on the estimated lifetime, the estimated time to failure, or a combination thereof.

According to another embodiment, an apparatus comprises means for monitoring one or more health parameter measurements associated with at least one device (e.g., an IoT device equipped with one or more UEs). The apparatus also comprises means for processing the one or more health parameter measurements using at least one machine learning model to predict an estimated lifetime of at least one subsystem of the at least one device, an estimated time to failure of the at least one device, or a combination thereof. The apparatus further comprises means providing the estimated lifetime, the estimated time to failure, or a combination thereof as an output. In one embodiment, the apparatus further comprises means for determining an adjustment of at least one function of the at least one device, at least one other device that interacts with the at least one device, or a combination thereof based on the estimated lifetime, the estimated time to failure, or a combination thereof.

According to another embodiment, an apparatus (e.g., an IoT device equipped with one or more UEs) comprises at least one processor, and at least one memory including computer program code for one or more computer programs, the at least one memory and the computer program code configured to, with the at least one processor, cause, at least in part, the apparatus to transmit data relating to at least one function of the apparatus to perform an analysis on the data using a machine learning model to predict an estimated lifetime of at least one subsystem of the apparatus, an estimated time to failure of the apparatus, or a combination thereof. The apparatus is also caused to receive at least one of: the estimated lifetime, the estimated time to failure, or a combination thereof; and at least one correction action determined based on the estimated lifetime, the estimated time to failure, or a combination thereof. The apparatus is further caused to initiate at least one of: a locally determined correction action determined by the apparatus based on the estimated lifetime, the estimated time to failure, or combination thereof; and the at least one correction action.

According to another embodiment, a method comprises transmitting, by an apparatus (e.g., an IoT device equipped with one or more UEs), data relating to at least one function of the apparatus to perform an analysis on the data using a machine learning model to predict an estimated lifetime of at least one subsystem of the apparatus, an estimated time to failure of the apparatus, or a combination thereof. The method also comprises receiving at least one of: the estimated lifetime, the estimated time to failure, or a combination thereof; and at least one correction action determined based on the estimated lifetime, the estimated time to failure, or a combination thereof. The method further comprises initiating at least one of: a locally determined correction action determined by the apparatus based on the estimated lifetime, the estimated time to failure, or combination thereof; and the at least one correction action.

According to another embodiment, a non-transitory computer-readable storage medium carries one or more sequences of one or more instructions which, when executed by one or more processors, cause, at least in part, an apparatus (e.g., an IoT device equipped with one or more UEs) to transmit data relating to at least one function of the apparatus to perform an analysis on the data using a machine learning model to predict an estimated lifetime of at least one subsystem of the apparatus, an estimated time to failure of the apparatus, or a combination thereof. The apparatus is also caused to receive at least one of: the estimated lifetime, the estimated time to failure, or a combination thereof; and at least one correction action determined based on the estimated lifetime, the estimated time to failure, or a combination thereof. The apparatus is further caused to initiate at least one of: a locally determined correction action determined by the apparatus based on the estimated lifetime, the estimated time to failure, or combination thereof; and the at least one correction action.

According to another embodiment, an apparatus (e.g., an IoT device equipped with one or more UEs) comprises means for transmitting data relating to at least one function of the apparatus to perform an analysis on the data using a machine learning model to predict an estimated lifetime of at least one subsystem of the apparatus, an estimated time to failure of the apparatus, or a combination thereof. The apparatus also comprises means for receiving at least one of: the estimated lifetime, the estimated time to failure, or a combination thereof; and at least one correction action determined based on the estimated lifetime, the estimated time to failure, or a combination thereof. The apparatus further comprises means for initiating at least one of: a locally determined correction action determined by the apparatus based on the estimated lifetime, the estimated time to failure, or combination thereof; and the at least one correction action.

In addition, for various example embodiments of the invention, the following is applicable: a method comprising facilitating a processing of and/or processing (1) data and/or (2) information and/or (3) at least one signal, the (1) data and/or (2) information and/or (3) at least one signal based, at least in part, on (or derived at least in part from) any one or any combination of methods (or processes) disclosed in this application as relevant to any embodiment of the invention.

For various example embodiments of the invention, the following is also applicable: a method comprising facilitating access to at least one interface configured to allow access to at least one service, the at least one service configured to perform any one or any combination of network or service provider methods (or processes) disclosed in this application.

For various example embodiments of the invention, the following is also applicable: a method comprising facilitating creating and/or facilitating modifying (1) at least one device user interface element and/or (2) at least one device user interface functionality, the (1) at least one device user interface element and/or (2) at least one device user interface functionality based, at least in part, on data and/or information resulting from one or any combination of methods or processes disclosed in this application as relevant to any embodiment of the invention, and/or at least one signal resulting from one or any combination of methods (or processes) disclosed in this application as relevant to any embodiment of the invention.

For various example embodiments of the invention, the following is also applicable: a method comprising creating and/or modifying (1) at least one device user interface element and/or (2) at least one device user interface functionality, the (1) at least one device user interface element and/or (2) at least one device user interface functionality based at least in part on data and/or information resulting from one or any combination of methods (or processes) disclosed in this application as relevant to any embodiment of the invention, and/or at least one signal resulting from one or any combination of methods (or processes) disclosed in this application as relevant to any embodiment of the invention.

In various example embodiments, the methods (or processes) can be accomplished on the service provider side or on the user device side or in any shared way between service provider and user device with actions being performed on both sides.

For various example embodiments, the following is applicable: An apparatus comprising means for performing a method of the claims.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the spirit and scope of the invention. Accordingly, the drawings and description are to be regarded as illustrative in nature, and not as restrictive.

BRIEF DESCRIPTION OF THE DRAWINGS

The embodiments of the invention are illustrated by way of example, and not by way of limitation, in the figures of the accompanying drawings:

FIG. 1 is a diagram of a system capable of providing device health estimation, according to one example embodiment;

FIG. 2 is a diagram of the components of a device health platform, according to one example embodiment;

FIG. 3 is a flowchart of a process for providing device health estimation, according to one example embodiment;

FIG. 4 is a diagram of an example machine learning model for providing device health estimation, according to one embodiment;

FIG. 5 is a diagram of system architecture for providing device health estimation and/or correction actions based on collected health measurements, according to one example embodiment;

FIG. 6 is a diagram of an example user interface for providing a device health estimation and/or correction action, according to one example embodiment;

FIG. 7 is a flowchart of a process for providing data for determining a device health estimation and/or a correction action, according to one example embodiment;

FIG. 8 is a diagram of an example device adjustment loop, according to one example embodiment;

FIG. 9 is a diagram of hardware that can be used to implement an example embodiment;

FIG. 10 is a diagram of a chip set that can be used to implement an example embodiment; and

FIG. 11 is a diagram of a mobile terminal, a user device, or an IoT device that can be used to implement an example embodiment.

DESCRIPTION OF SOME EXAMPLE EMBODIMENTS

Examples of a method, apparatus, and computer program for providing device health estimation are disclosed. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, structures and devices are shown in block diagram form in order to avoid unnecessarily obscuring the embodiments of the invention.

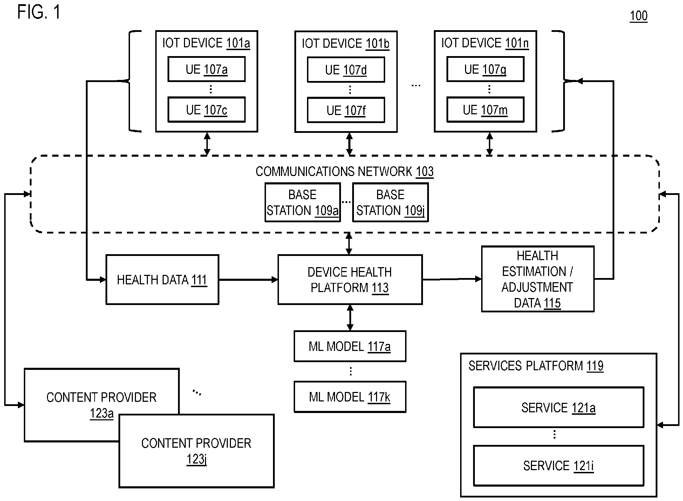

FIG. 1 is a diagram of a system capable of providing device health estimation, according to one example embodiment. Advances in wireless communications networks 103 (e.g., 5G New Radio (5G NR), NB-IoT (Narrowband Internet of Things), LoRaWAN® (Long Range Low-power wide-area network), Low-power Wide-Area Network (LPWAN)) are targeting new vertical market segments like Internet of Things (IoT) comprising a system of communications devices (IoT devices 101a-101n, also collectively referred to as IoT devices 101) that have wireless network connectivity over a communications network 103 (e.g., 5G NR wireless network or equivalent). IoT devices 101 can be equipped with one or more user equipment (UEs) 107a-107m, one or more sensors, one or more hardware (HW) components, or any combination thereof (also collectively referred to as UEs 107) that can be any end user device that is used to communicate over the communications network 103, for instance, by connecting to one or more base stations 109a-109j, one or more access points or any combination thereof (also collectively referred to as base stations 109) of the communications network 103. In some implementations, the communications network 103 can also comprise one or more wired network connections, such a LAN (Local Area Network) to connect one or more IoT devices 101.

In one embodiment, the IoT devices 101 (or any other communications device or UE 107 in general) can be used for remote sensing, data collection, data analysis, tracking, etc. across a variety of use cases. For example, in an Industrial IoT (IIoT) use case, one or more IoT devices 101 can be installed in industrial equipment, production lines, etc. to monitor industrial processes. Because of the critical nature of some of these processes (e.g., health, safety, environment, etc. monitoring), IIoT often have strict requirements concerning reliability and availability of the IoT devices 101 (or the one or more UEs 107 contained therein). As a result, it is expected that IoT devices 101 with multiple UEs 107 will be commonly used for HOT use cases similar to how most Ethernet based critical equipment today have multiple Network Interface Controller (NIC) cards.

In many cases, the IoT devices 101 (e.g., when used in IIoT applications or other equivalent use cases) may be required to have operational lifetimes in excess of, e.g. 10 years while also being subject to environmental impacts of chemicals, dust, humidity, temperature, etc. Moreover, as they are often a part of a larger industrial production, each IoT device 101 may not be easily replaceable at any time without a major impact to remaining production.

By way of example, IoT devices 101, UEs 107, and/or other communications devices (e.g., base stations 109) deployed in a communications network 103 have one or more HW components which can degrade over time and lead to eventual failure. Examples of these components, related health parameters and health concerns include but are not limited to the following (List 1):

- Crystal oscillator - This component has an aging related frequency drift which is typically specified by the manufacturer in parts per million (ppm) per year. This aging related frequency drift typically decreases over time. This aging related frequency drift can lead to longer synchronization time during cell selection.

- Flash memory - This component typically has a maximum number of write cycles specified by the manufacturer. However, the spread of errors is not uniform across all its pages. Pages which are written often will degrade faster than those which are written to seldomly.

- Power amplifier (PA) - When subj ected to high voltage and temperature the transistors (BJT or MOSFET) in the PA are subjected to stress which over time result in permanent loss of gain. Consequently, the gain curve of the PA becomes more non-linear over time.

- Low noise amplifier (LNA) - Similar to PA, when subjected to temperature and voltage (although much lower than PA), the LNA might also show reduced gain and more importantly its Noise Figure might degrade.

- Surface Acoustic Wave (SAW) filters - Over time when subjected to high radio-frequency (RF) power, the insertion loss or passband attenuation of these filters increases.

- Battery and associated circuits - with time, battery impedance increases. At the same time, if exposed to low temperatures and moisture, the associated circuitry can corrode, and this will also result in an increase in impedance. In addition, capacitors, especially class 2 or lower, will age and their capacitance will decrease with time. This can result in ripples in the input voltage to various components that can lead to degraded performance or failure.

Some of the IoT devices or UEs 107 might age faster than other and, therefore, might also need to be replaced sooner than others. Similarly, in a multi-UE device, different UEs 107 might have aged differently over the same time period. As a result, a multi-UE device may achieve suboptimal performance if it is assumed that its multiple UEs 107 have a uniform reliability and availability when deciding the proper split of data between them. In the worst case, the IoT device 101 may fail to meet its target reliability and availability which would result in service outage on which critical applications might be dependent. Accordingly, device manufacturers and service providers face significant technical challenges to determining when a communications device (e.g., IoT device, UEs 107, base station, access point, etc.) might fail.

To address these technical challenges, the system 100 of FIG. 1 introduces a capability to estimate the lifetime of a UE 107 and/or any other communications device of the communications network 103, in either a single or multi-UE device based on one or more health parameter measurements. In one example embodiment, these device health estimates are then used for taking one or more actions/measures to extend the lifetime as well as for compensating for poor health of the communication device. In addition, it is contemplated that the embodiments of the process for estimating device health and/or determining correction actions or adjustments to device functions based on the estimates can be implemented as standalone processes or as network-based actions that can be standardized and adopted by relevant standards organizations.

In one example embodiment, the system 100 designates one or more parameters to be measured for determining the health of the one or more IoT devices 101 equipped with the one or more user equipment (UEs) 107a-107m, the one or more sensors, the one or more hardware (HW) components, or any combination thereof (also collectively referred to as UEs 107), but not limited to, the components described above. In one embodiment, the one or more health parameters can be measured periodically or continuously by a device (e.g., IoT device 101) for its one or more UEs 107 to generate health data 111, e.g. health parameter measurement, for processing by a device health platform 113. Examples of the health parameters to monitor include, but are not limited to (List 2):

- Number of writes, percentage of bad pages in the flash memory;

- Temperature measurement averaged over certain time period;

- Humidity measurement averaged over certain time period;

- Crystal's aging related frequency drift;

- Error Vector Magnitude (EVM) of the transmission (Tx) Chain at maximum transmit power;

- Bit Error Rate (BER) or Block Error Rate (BLER) of a reception (Rx) chain;

- Stable voltage level, increased impedance, change in capacitance, as well as ripples in transient voltage when the power amplifier, baseband processor, and other similar components are turned on at full power;

- Loss or reduce of gain in the power amplifier (PA) or low noise amplifier (LNA);

- Increased battery impedance;

- Decreased capacitance of capacitors; and

- Increased insertion loss of Surface Acoustic Wave (SAW) filters.

Based on the actual design of the UE 107, the system 100 can monitor a subset of these input parameters. Furthermore, the system 100 can also have a superset containing the input parameters identified above in addition to other device health related parameters. It is further contemplated that any other health related parameter relevant to the UE 107 and/or IoT device 101 can be used to estimate device health regardless of how those measurements are done. In other words, any parameter or combination of parameters relevant to estimating device health can be monitored for determining device health estimates and/or resulting correction actions/adjustments (e.g., for generating the health estimation/adjustment data 115) can be used. By way of example, the health estimates can include but are not limited to:

- Estimated lifetime of the IoT 107's or UE 107's age-critical subsystem (e.g., an RF sub-system (RF-SS), Radio Frequency Front End (RFFE), etc.) for example, the estimated lifetime gives an estimate of how long the IoT device 101 and/or UE 107 can be used for reliable communication under current usage and environmental conditions determined from the measured parameters; and

- Estimated time to critical failure - for example, this is an estimate of the IoT device 101's and/or UE 107's lifetime until it breaks down all together under current usage and environmental conditions determined from the measured parameters.

In one example embodiment, RFFE refers to an RF frontend that contains RF related components. By way of example, these components include but are not limited to power amplifier (PA), low noise amplifier (LNA), mixer, frontend switch, balun, filters, voltage controlled oscillator (VCO), crystal oscillator (XO), etc.

In one example embodiment, RF-SS refers to the RF subsystem that includes but is not limited to the RFFE, RF processing components, analog-to-digital/digital-to-analog (AD/DA) converters, and power management. The processing often can result in a digital interface (e.g., DigRF, eCPRI (evolved Common Public Radio Interface), and/or any other equivalent proprietary standards). In some cases, the processing can also result in an analog interface toward baseband.

In one example embodiment, the baseband (BB) contains of processor(s), power management, and memory devices (ROM, RAM, Flash types). The UE 107 is fully populated user equipment containing at least the RFSS and BB.

In one embodiment, the device 101 is any device containing one or multiple UEs 107, i.e. any type of combinations of RFSS or BBs interconnected separately.

With respect to the description above, in one example embodiment, an RFSS lifetime is a lifetime estimate that indicates the time period after which, at the current rate of usage and environment conditions, some part of the RF subsystem (e.g., filters, PA, LNA, or other part of the RFSS) will degrade beyond its usable limit. This is an estimate of how long the UE 107 can be used for reliable communication.

In one example embodiment, the lifetime estimate can be based on a BB lifetime. The BB lifetime indicates the time period after which, at the current rate of usage and environmental conditions, a critical failure will occur in some non-RF UE component(s). This failure (also referred to as a critical time to failure estimate) could be anything like general baseband failure, flash failures or battery failure or high impedance due to corrosion built up or high transients in output power leading to failure of components.

In yet another example embodiment, the lifetime estimate can be based on a UE lifetime which is an estimate of the UE 107's time until complete breakdown at the current rate of usage and environment conditions (e.g., determine from monitored health measurement data 111).

In one example embodiment, in an initial training period of an estimation algorithm (e.g., one or more machine learning (ML) models 117a-117k (also collectively referred to as ML models 117), these measurements, e.g. the health related parameters 111, are stored, e.g. in the device health platform 113 and/or one or more the IoT devices 101, to build up statistics over which the estimation algorithms 117 can be trained. In one aspect, the one or more lifetime estimates are calculated by means of one or more modules of the device health platform 113 which is capable of storing measurements, training estimation algorithms, and executing them. It is contemplated that this module can be located on the edge cloud or central cloud. The estimation algorithms could also be executed on device (e.g., IoT device 101 and/or UE 107) itself, e.g., after the fully trained algorithm has been downloaded to the device or even an untrained model that is then trained on the device. The training of the algorithm can be done in the cloud infrastructure as it involves collecting large amounts of data from many UEs 107 or IoT devices 101 over a significant period. However, in one embodiment, the data can be made available to the device itself, so that training can also occur locally at the device.

In one example embodiment, once the one or more algorithms are trained, their related device health estimates can then be used to take actions which compensate for bad health and/or extend the lifetime of the UE 107 and/or IoT 101. It is contemplated that the one or more correction actions or adjustments can be determined heuristically from the health estimates. In other embodiments, the correction actions or adjustments can themselves be determined or predicted from one or more action/correction prediction/determination algorithms (e.g., ML models 117) trained to predict the one or more correction actions or adjustments to extend the lifetime based on input parameters or features such as the health parameters above in combination with the health estimates and/or data on components of the communications network 103 (e.g., base stations 109) that interacts with the UE 107 and/or IoT 101. These one or more correction actions or adjustments based on the device health estimates can include, but are not limited to, the following (separated based on device-based actions and network-based actions) (List 3):

- Device-originated actions/adjustment/measures to extend the UE 107's or IoT 101's life:

  ○ Reduce max reported Tx power based on RF-SS lifetime estimate;

  ○ Actions based on time to critical failure estimate of the UE 107 or IoT 101 such as but not limited to updating/reducing the UE 107's capabilities like number of supported MIMO (multiple-input and multiple-output) layers, number of aggregated downlink (DL) carriers (DL bandwidth), and/or number of aggregated uplink (UL) carriers (UL bandwidth); etc.;

  ○ Reduce or limit write cycles to a specific flash memory;

  ○ Reduce or limit voltage level in a specific PA or LNA;

  ○ Reduce or limit temperature level in the environment of a specific PA or LNA;

  ○ Reduce or limit RF power level in a specific SAW filer;

  ○ Increase temperature level and/or lower moisture level in the environment of a specific battery;

  ○ Induce measures to reduce power requirements like running baseband processor and other components at reduced clock-rate;

◦ Reduce or limit temperature level in the environment of the UE 107's or IoT 101; and

◦ Increase temperature level and/or lower moisture level in the environment of the UE 107's or IoT 101.

• Network-originated related actions/adjustments/measures based on UE feedback to compensate for bad health, additional to the actions/adjustment/measures described also relating to the UE 107's or IoT 101:

◦ Moving usage/bandwidth between UEs 107 of the IoT 101 based on the health estimates (e.g., moving usage/bandwidth from a first UE 107a with a poor health estimate to a second UE 107b of a multi-UE device 101 with a better estimated lifetime). By way of example, the usage/bandwidth can be moved by allocating more bandwidth, allocating a higher Modulation and Coding Scheme (MCS)), and/or any other equivalent operation.

◦ Reduce target Tx power based on RF-SS lifetime estimate; and

◦ Move usage/bandwidth between UEs 107 of the IoT 101 based on the health estimates. In other words, in response to UE feedback, the NW can move usage/bandwidth from one UE of a multi-UE device to another UE of the same multi-UE device based on the lifetime estimates of the UEs of the multi-UE device. In one example embodiment, the usage/bandwidth can be moved by allocating more bandwidth, allocating a higher Modulation and Coding Scheme (MCS)), and/or performing any other equivalent operation.

◦ Reallocate reduced Tx power to other UEs 107 of the IoT device 101 if the IoT device 101 is a multi-UE device (e.g., moving use from one UE of a multi-UE device to another UE of the same multi-UE device).

In general, the one or more correction actions/adjustment/measures for the UE 107, IoT 101 or elements of the communication network 103 can comprise reducing, increasing, changing and/or alternating the one or more health parameters. Other possible actions or adjustments include but are not limited to presenting alert messages to raise flags about the health status of a device; triggering a service or maintenance of a device; triggering a replacement of the device; and/or the like.

In one example embodiment, the one or more health estimates and/or the one or more determined correction actions/adjustments can be provided as an output to the IoT device 101 and/or UE 107. By way of example, the output can be the health estimate (e.g., meaning that the system 100 can avoid doing health estimation calculation on-device), or can be the health data 111 which is then input to perform the on-device estimation. The devices can then implement an action in response to the health estimation if needed. The output can also be provided to other services or applications that use device health estimation and/or adjustment data 115. For example, the output can be provided to a services platform 119 and/or any of the services 121a-121r (also collectively referred to as services 121) of the services platform 119. The output can also be provided to one or more content providers 123a-123j (also collectively referred to as content providers 123) that can aggregate and provide the health estimation/adjustment data 115 to the services platform 119 and/or services 121.

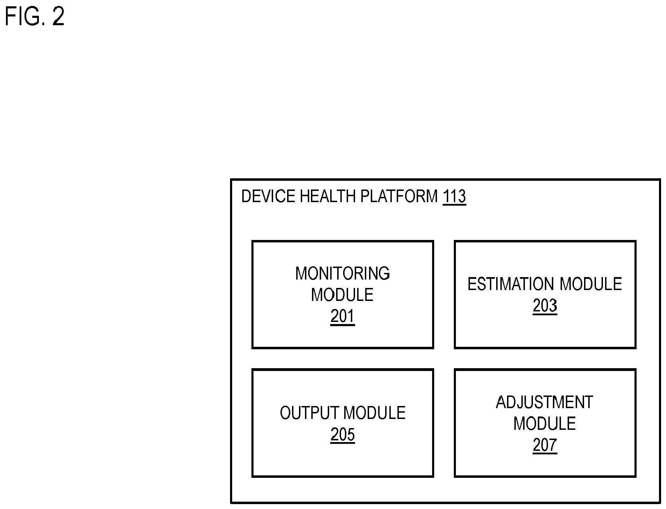

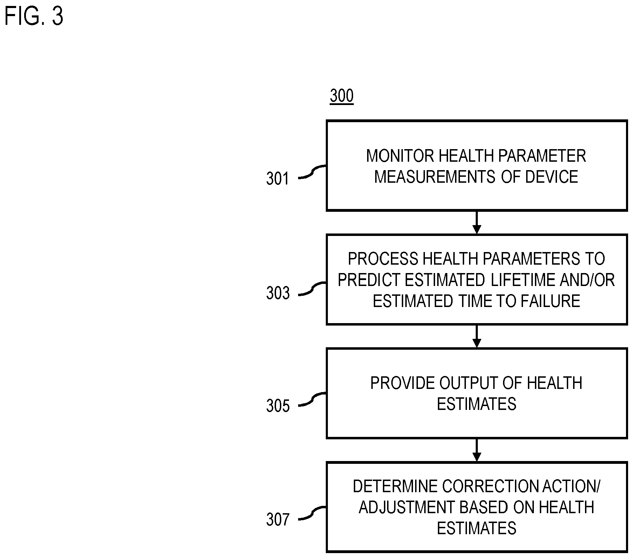

In one example embodiment, the device health platform 113 includes one or more components for providing device health estimation according to the various embodiments described herein. As shown in FIG. 2, the device health platform 113 includes a monitoring module 201, an estimation module 203, an output module 205, and an adjustment module 207. The above presented modules and components of the device health platform 113 can be implemented in hardware, firmware, software, or a combination thereof. It is contemplated that the functions of these components may be combined or performed by other components of equivalent functionality. Though depicted as a separate entity in FIG. 1, it is contemplated that the device health platform 113 may be implemented as a module of any of the components of the system 100 (e.g., a component of the services platform 119, services 121, IoT device 101, UE 107, communications network 103, etc.). In another embodiment, the device health platform 113 and/or one or more of the modules 201-207 may be implemented as a cloud-based service (e.g. in the communication network 103), local service, native application, or combination thereof. The functions of these modules are discussed with respect to FIGs. 3-6 below.

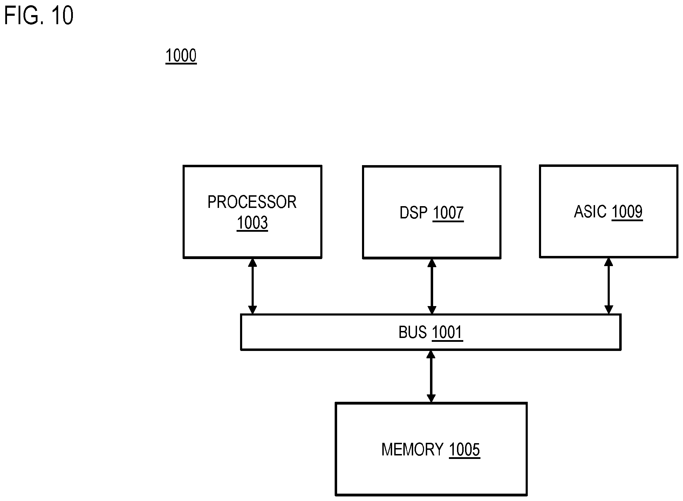

FIG. 3 is a flowchart of a process for providing device health estimation, according to one embodiment. In various embodiments, the device health platform 113, any of the modules 201-207 of the device health platform 113, IoT device 101, and UE 107 may perform one or more portions of the process 300 and may be implemented in, for instance, one or more chip sets and/or circuitry including a processor and a memory as shown in FIG. 10. As such, the device health platform 113, any of the modules 201-207, IoT device 101, and/or UE 107 can provide means for accomplishing various parts of the process 300, as well as means for accomplishing embodiments of other processes described herein in conjunction with other components of the system 100. Although the process 300 is illustrated and described as a sequence of steps, its contemplated that various embodiments of the process 300 may be performed in any order or combination and need not include all of the illustrated steps.

As discussed above, as IoT devices 101, UEs 107, and/or other communications/network devices operating in IIoT or equivalent scenarios are expected to live much longer than commercial mobile handsets while also having higher duty cycle and reliability requirements, the device health platform 113 can be used to obtain periodic measurements of their health. Accordingly, in step 301, the monitoring module 201 monitors one or more health parameter measurements of at least one device (e.g., IoT device 101, UE 107, and/or other communications devices). As multi-UE devices reliability/availability requirements, this health metric can be used to understand and determine how to distribute these requirements over the multiple UEs 107 of the device (e.g., IoT device 101).

The various example embodiments described above identified one or more example device components (e.g., UE, sensor and/or HW components) which degrade over time because of age, usage, environmental conditions (e.g. moisture, temperature, and/or vibrations), and/or the like that they are subjected to. In one embodiment, it is assumed that the devices are not subjected to extreme environmental conditions their specified rating which can result in immediate or unanticipated breakdown of device all together. In other embodiments, the monitoring module 201 can monitor for these extreme environmental conditions as additional input parameters for the health estimation algorithms.

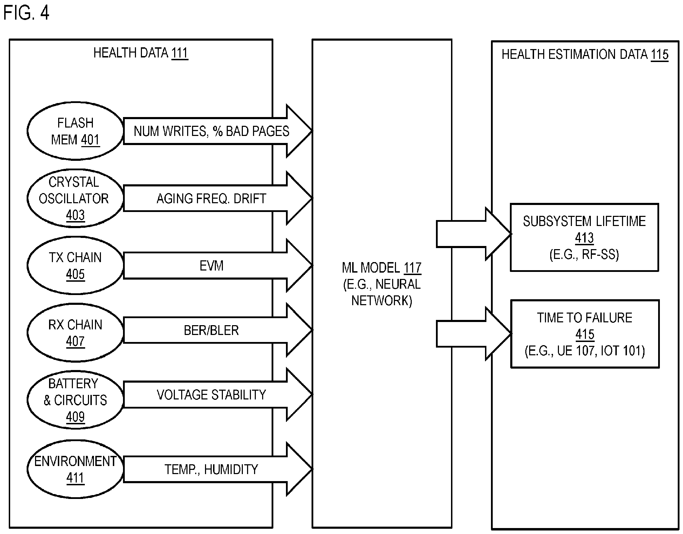

As shown in the example of FIG. 4, as part of device health monitoring, one or more of the following measurements can be done periodically, on demand, continuously, according to a schedule, etc. to assess the health of the one or more device components such as, but not limited to (List 4):

- Flash memory 401: Example monitored parameters can include, but is not limited to, number of writes over a period, and percentage of bad pages. In one example embodiment, these flash memory measurements can be performed in software.

- Crystal oscillator 403: An example monitored parameter can include, but is not limited to, aging related frequency drift. This can be measured by locking on to the cellular network's (e.g., communications network 103) downlink signal and measuring the frequency drift as compared to it. This frequency drift can then be compared to the expected frequency drift at the temperature at which the crystal is operating. The difference can be reported as the aging related frequency drift.

- Tx Chain 405: An example monitored parameter can include, but is not limited to, an Error Vector Magnitude (EVM) at maximum power. For this, the EVM at maximum power after the RF switch can be measured in order to include the entire Tx chain 405 (e.g., chain of components related to or associated with transmitting signals from the monitored device). This measurement can be done by looping back the Tx signal to the Rx chain and measuring it at the RF transceiver.

- Rx Chain 407: Example monitored parameters can include, but are not limited to, Bit Error Rate (BER) and/or Block Error Rate (BLER) of the Rx chain 407 (e.g., chain of components related to or associated with receiving signals at the monitored device). The BER or BLER at a predefined received signal level can be measured and reported. Changes in these measurements over time are an indicator of worsening insertion loss of filters and noise figure of the Low Noise Amplifier (LNA). The BLER, for instance, can be measured by looping back the Tx signal at a certain low power level to Rx chain.

- Battery and associated circuits 409: An example monitored parameter includes, but is not limited to, voltage stability. In one embodiment, this can be measured by measuring the stable voltage levels (e.g., $V_{s1}$, $V_{s2}$ ... $V_{sn}$) and peak transient voltages ($V_{p1}$, $V_{p2}$ ... $V_{pn}$) when various critical components are turned on. For example, turning on the power amplifier (PA) at max power and measuring the voltage output from the battery can show the impact of increased impedance and any change in capacitance used to regulate output power from the battery. Increased impedance can require higher voltage to obtain the same output power while change in capacitance may introduce ripples in measured voltage levels immediately after the PA is turned on. Similar measurements can be made at the output of low dropout (LDO) voltage regulators which are used to regulate power to various other UE components like the baseband processor. These measurements will show similar patterns when impedance or capacitance changes.

- Environmental Factors 411: Examples of monitored parameters include, but are not limited to, temperature and/or humidity. For example, in the case of temperature measurements, most devices are equipped with temperature sensors so that compensation for the crystal oscillator's frequency drift can be done. In one embodiment, the mean of temperature readings collected over a time period can be reported. In the case of humidity, measurement of the humidity present in the environment in which the device is operating can performed. As with temperature, the mean of humidity measurements collected over a time period can be reported.

It is noted that the example embodiments of the device components and measurements to be performed are provided by way of illustration and not as limitation. The example embodiments above are based on an example of a device design which incorporates, at least one of a Flash Memory 401, RF sub-system with a Tx chain 405 and/or Rx chain 407, Crystal 403, Temperature sensor, humidity sensor (e.g., for sensing environmental factors 411), as well as battery and other power regulation circuits 409. In one embodiment, the inputs to the ML model 117 as shown in FIG. 4 (or other equivalent estimation algorithm) can be a subset of these based on the actual design of the monitored device. For example, a monitored device (e.g., UE 107) with aging compensated crystal might not provide aging drift information as an input. In another embodiment, a superset of inputs containing all or some of these inputs is also a possibility if the actual UE design contains some more components that are indicative of device health (e.g., parameters affected by aging, usage, environmental conditions, etc.). In yet another example embodiment, the other components can be used in place of one or more of the listed inputs based on the design of the monitored device.

In one example embodiment, the monitoring of the health data 111 can be associated with one or more monitoring parameters associated with other one or more devices that interact with the monitored device. For example, the monitoring module 201 can monitor the transmission power and/or UE selection from a base station 109 or other network component with connectivity to the monitored device 101 or 107.

In one example embodiment, these measurements can be collected and stored over a period of time so that enough information is collected to train estimation algorithms for, e.g., the ML model 117 such as, but not limited to, one or more neural network(s).

In one example embodiment, the estimation module 203 can incorporate a supervised learning model to train the ML model 117 (e.g., a neural network) to predict/determine device health estimation data 115 from the input parameters (e.g., the monitored health data 111). Examples of the health estimation data 115 include but is not limited to a subsystem lifetime estimate 413 and a time to failure 415 For example, during training of the estimation algorithm or ML model 117, the estimation module 203 feeds feature sets extracted from a ground truth input data set (e.g., the health data 111 labeled with ground truth health estimates or status) to predict/determine device health estimates using an initial set of model parameters. The estimation module 203 then compares the predicted health estimates to the ground truth data (e.g., known health values). The estimation module 203, for instance, computes a loss function based on the initial set of model parameters such that the loss function optimizes the accuracy of the health estimations related to the ground truth data.

In one example embodiment, the estimation module 203 incrementally adjusts the model parameters until the model maximizes the accuracy, or desired level of the accuracy, of the predicted health estimates using the loss function. In other words, the "trained" ML model 117 or estimation algorithm is a model or algorithm with parameters (e.g., coefficients, weights, etc.) adjusted to make predictions of the embedding layer with maximum accuracy or accuracy above a designated threshold with respect to the ground truth data.

FIG. 4 illustrates an example embodiment that uses an ML model 117 (e.g., a neural network) which outputs one or more device health estimates based on input health data 111. Examples of the health estimates that can be output by the ML model 117 include, but are not limited to:

- Estimated device subsystem (e.g., RF-SS) lifetime: This indicates the time period after which, at the current rate of usage and environment conditions, some part of a subsystem of the device will degrade beyond its usable limit. For example, when the subsystem is an RF-SS, the parts that can degrade include, but are not limited to, filters, PA, LNA, and/or dependent components (e.g., Crystal). In the case of an RF-SS lifetime, this is an estimate of how long the UE 107, IoT device 101 and/or base station 109 can be used for reliable communication.
- Estimated device lifetime or time to failure: This indicates the time period after which, at the current rate of usage and environmental conditions, a critical failure will occur in some UE or device component. This failure could be anything like flash failures or battery failure or high impedance due to corrosion build up or high transients in output power leading to failure of components. Further, the parts that can fail include, but are not limited to, one or more filters, PA, LNA, and/or dependent components (e.g., a Crystal). In one example embodiment, this is an estimate of UE 107's, IoT 101's, and/or base station 109's time until complete breakdown, or until degrade beyond its usable limit.

By way of example, the lifetimes or device health estimates can be specified in time units, as a percentage of the remaining expected lifetime, or equivalent. In one example embodiment, the expected lifetime estimates (as opposed to the predicted/determined lifetime estimates) may be pre-configured by a vendor of the device or component, or may be a dynamically updated value (e.g., updated by the network, vendor, others, etc.). This value can be queried from a corresponding source (e.g., vendor, network, etc.)

In step 303, after training the ML model or estimation algorithm to make one or more device health estimations, the estimation module 203 processes the one or more health parameter measurements (e.g., input health data 111 comprising one or more of 401 - 411) using at least one ML model 117 to predict an estimated lifetime of at least one subsystem (e.g., RF-SS) of the at least one device, an estimated time to failure of the at least one device (e.g., complete failure of the device), or a combination thereof. The output module 205 can then provide the device health estimates (e.g., the estimated lifetime, and/or the estimated time to failure) as an output to one or more components of the system 100 (step 305).

In one example embodiment, in step 307 the adjustment module 207 can determine at least one adjustment of at least one function of the at least one device (e.g., UE 107, IoT 101), at least one other device (e.g., base station 109) that interacts with the at least one device, or a combination thereof based on the estimated lifetime, the estimated time to failure, or a combination thereof. In another example embodiment, the determination of the adjustment can be performed by the device (e.g., UE 107, IoT 101) itself based on health estimations, health measurements, or any combination thereof.

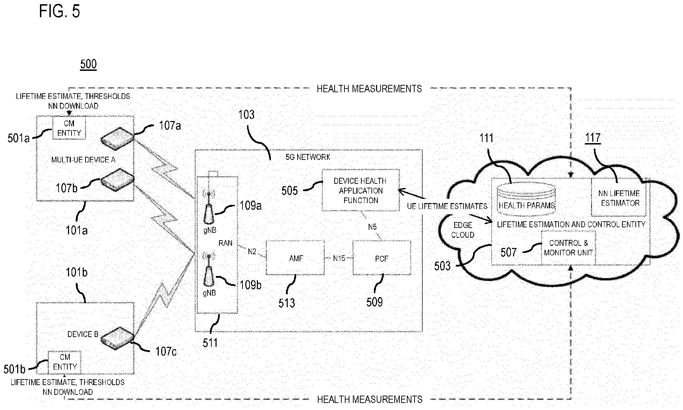

While FIG. 1 illustrates an example of a general system 100 that can determine one or more health estimates and/or correction actions/adjustments to take in response to the estimates, according to one embodiment, FIG. 5 illustrates a related cloud-based embodiment 500 of the system 100 which makes it possible to take certain actions based on the lifetime estimates. For example, components of the system 500 of FIG. 5 include a Connection Manager (CM) entity 501 on the device (e.g., the IoT 101 or UE 107), Lifetime Estimation and Control (LEC) entity 503 running on the edge cloud (e.g., an cloud-based instance of the health estimation platform 113), and the Device Health Application Function (DHAF) entity 505 in the communications network 103 core (e.g., 5G core). Embodiments of these components are described below.

In one example embodiment, the CM Entities 501a and 501b (also collectively referred to as CM Entities 501) are located on the device side in respective devices 101a and 101b (e.g., IoT devices). The CM Entities 501 are responsible for managing the one or more UE connections and/or functions with certain availability and/or reliability targets (e.g., targets based on use case applications such as, but not limited to, IIoT, and/or target thresholds). The CM Entities 501 can also trigger the UE self-tests periodically, on demand, according to a schedule, etc. to obtain the health measurements described above. The CM Entities 501 have a control interface to each UE 107 in the device 101 (e.g. AT commands or other proprietary or equivalent interface).

In one example embodiment, the CM Entities 501 are connected logically to the LEC entity 503 on the edge cloud and can send monitored health parameters periodically, on demand, according to a schedule, etc. In one example, the CM Entities 501 are connected to the LEC entity 503 over a communication network, comprising at least one of a wireless communication network (e.g. a 5G network) or a wired communication network, or any combination thereof. The CM Entities 501 can also obtain or otherwise receive the related device health estimates (e.g., lifetime estimates and/or expected lifetimes) from the LEC entity 503 based on the monitored health parameters. As used herein, lifetime estimate is a predicted based on the monitored health data and the expected lifetime is the lifetime of the device or its subsystem based on design specifications. The expected lifetime, for instance, can be specified by a manufacturer as a mean time between failure (MTBF) based on normal or default operation conditions in which the device is expected to be operated. In contrast, the lifetime estimates according to the embodiments described herein determine the lifetime based on monitoring actual operating conditions (e.g., as reported from health measurements or parameters). Additionally or alternatively, the CM Entities 501 can obtain one or more thresholds for taking certain one or more actions (e.g., correction actions or adjustments outlined in the embodiments described herein). Lastly depending on a device capability, CM Entities 501 can also calculate the device health estimates (e.g., lifetime estimates) itself and/or run a downloaded lifetime estimation ML model 117 (e.g., trained neural network) from the LEC entity 503 to generate the device health estimates locally at the device 101.

In one example embodiment, the LEC entity 503 (e.g. the device health platform 113) runs on the edge cloud and includes a health parameters storage module (e.g., health data 111), a lifetime estimation Neural Network (NN) (e.g., an ML model 117 or equivalent estimation algorithm/module 203), and/or a Control & Monitor module 507 (e.g. the monitoring module 201 and/or the output module 205 and/or the adjustment module 207). The heath data storage 111 is used to store the health measurements received from various CM entities 501 on devices 101. These measurements, for instance, are used to train the ML model 117 (e.g., neural network or equivalent) to estimate device health (e.g., lifetime estimates) as previously described. In one embodiment, the LEC entity 503 can also download or upload the one or more trained neural networks or ML models 117 to the device 101 which can then run it locally. The lifetime estimates can be monitored using the Control & Monitor module 507 which also functions as an administrative interface to set one or more various thresholds for taking correction actions or adjustments based on the device health estimates. The LEC entity 503 also has a connection to the DHAF entity 505 in the 5G network (or other equivalent communications network 103) to which it can provide the device health estimates (e.g., UE lifetime estimates), corrections actions/adjustments to extend device lifetime (e.g., UE lifetime), and/or thresholds for taking the actions (e.g., network based actions) to extend device lifetime.

In one example embodiment, the DHAF entity 505 is inside of the 5G network core (or equivalent communications network 103 core), or alternatively, the DHAF entity 505 is within the LEC entity 503. The DHAF entity 505 is an adaptation layer which receives one or more of device health estimates (e.g., lifetime estimates), related expected lifetimes, related correction actions/adjustments, and related thresholds from the LEC entity 503 and relays it in terms of policies to standard network Policy Control Function (PCF) component 509 over the N5 interface (or via a Network Exposure Function (NEF) or equivalent). These policies are then further relayed to the Radio Access Network (RAN) 511 via the Access Management Function (AMF) 513 as shown in FIG. 5. Based 3GPP standards handles can be used to adjust the one or more parameters related to devices and their reliability (including the adoption related to multi-UE device capabilities).,

As described above, the output module 205 of the device health platform 113 can output one or more the device health estimates, correction actions/adjustments based on the one or more device health estimates, and/or related thresholds for taking the one or more corrections actions. These outputs can be used in the device-based and/or network (NW)-based implementations to take certain actions. Each implementation is described below independently, however, this does not exclude a combined implementation on both sides (e.g., both device and network sides). As previously discussed, the device health estimates can be expressed as an estimated minimum lifetime remaining for the device 101, UE 107, or any of its components (e.g., RFSS, RFFE, BB, etc.). For example, the lifetime estimate for the RFSS can be denoted as $T_{RFSS\_min}$, the lifetime estimate for the RFFE can be denoted as $T_{RFFE\_min}$, the lifetime estimate for the BB can be denoted as $T_{BB\_min}$, the lifetime estimate for the UE can be denoted as $T_{UE\_min}$, and so on for other components.

In one example embodiment, the LEC entity 503 can provide the one or more thresholds for taking various actions to the device and/or network. Multiple thresholds for subsystems of the device 101 can be defined. For example, in an embodiment in which the subsystem of interest is the Radio Frequency Front End (RFFE), the multiple thresholds can be defined with decreasing values for the RFFE lifetime estimates - $T_{RFFE1}$, $T_{RFFE2}$, ..., $T_{RFFEn}$, and $T_{RFFEmin}$. In an example embodiment in which the subsystem of interest is the RFSS, the multiple thresholds can be defined as $T_{RFSS1}$, $T_{RFSS2}$, ..., $T_{RFSSn}$, and $T_{RFSSmin}$. Thresholds for other components can be similarly defined.

In addition, at least one or more thresholds can be defined with decreasing values for the device lifetime estimates (e.g., estimated time to failure of the UE 107, device 101, base stations 109, and/or any other component of the system 100) - $T_{UE1}$ and $T_{UE2}$. Embodiments of the usage of these thresholds are as explained below. In general, the LEC entity 503 can provide the one or more thresholds for taking one or more actions to the device and/or network. For example, the device 107, IoT device 101, base station 109 and/or any other can be provided with one or more thresholds either for decreasing and/or increasing values of the one or more correction actions or adjustments as listed e.g. on the Lists 1 - 4.

In one example embodiment, a device-based implementation can be used. Under this embodiment, the CM entity 501 in the device 101 itself can take counter measures to make sure that the UE 107 functions properly until the next scheduled service. Examples of these measures are explained in the processes below.

For example, when any part of the UE1 (UE2, UEn) lifetime estimate (or lifetime estimate for any other monitored component, e.g., RFSS, RFFE, BB, etc.) goes below a predefined threshold, $T_{UE1}$, the CM entity 501 can trigger the one or more measures to extend the UE's (or other component's) lifetime through its control interface (e.g., AT commands or other proprietary interface). Such AT commands will then in turn trigger, e.g., a new UE capability report towards the network.

In one example embodiment, the report can trigger actions such as but not limited to:

- Reduce the maximum bandwidth in both uplink and downlink in order to reduce the load on the UE 107. Such procedure could be taken by e.g. providing an updated/new UE capability information to the gNB (next generation Node B)/eNB (evolved Node B) (e.g., base station 109), or by transmitting UEAssistanceInformation message. In case of UE capability update, the SupportedBandwidth parameter would be changed.
  ◦ This, for instance, can take care of reducing the average clock speed, voltage, flash operations, temperature and other system parameters which age the UE components.
- Reduce the reported maximum Tx power by the UE 107.

In general, as one example measure, the CM entity 501 can progressively reduce a UE's maximum TX power, uplink and downlink capabilities until the RFSS lifetime estimate and/or the BB lifetime estimate, hence, the UE lifetime estimate from the NN 117 comes over the related expected lifetime(s).

As another example measure, the CM entity 501 may also reduce the utilization of some parts of the UE 107 with critical lifetime estimate (or estimated time to failure) and shift the availability requirement to other UEs 107 in a multi-UE device as an autonomous internal action.

In another example embodiment, when or if the UE lifetime estimate goes further below another threshold (e.g., $T_{UE2}$), the CM entity 501 can trigger further measures such as but not limited to:

- Use the UE 107 only in case availability requirement is not satisfied with the remaining UEs 107 in the multi-UE device. If any one of the estimates goes under absolute minimum, then it can selectively turn off at least one uplink and/or downlink data channel

In another example embodiment, with respect to the above description of lifetime estimates (e.g., RFSS lifetime, UE lifetime, RFFE lifetime, BB lifetime, etc.), the system 100 can be expanded with further conditions including specific subsets of the supersets of the devices 101/UEs 107/components thereof, or that the conditional variables (e.g., RFSS lifetime, BB lifetime, etc.) may be increasingly specific with respect to component or subsystem, e.g., flash lifetime vs. flash expected lifetime, baseband lifetime vs. baseband expected lifetime, and so forth.

Example pseudocode for the approach of the embodiments described herein upon identifying a problem (e.g., predicted lifetime less than expected lifetime by more than a threshold, critical time to failure less than a threshold) with a given device 101, UE 107, or component thereof is provided in Table 1 below.

```
//initialization of parameters
    reported_max_tx_power = default_max_tx_power;
    reported_max_rx_bw = default_max_rx_bw; //Including carrier aggregation and downlink
MIMO
    reported_max_tx_bw = default_max_tx_bw; //Including carrier aggregation and uplink
MIMO

    UE1_uplink  = check_ul_availability(UE1);
    UE1_downlink = check_dl_availability(UE1);
    UE1_reported_capabilities = [reported_max_tx_power, reported_max_rx_bw,
reported_max_tx_bw];

    UE_lifetime_adjustment_priorities = [adjust_tx_bw, adjust_rx_bw, adjust_max_power];
    RFSS_lifetime_adjustment_priorities = [adjust_tx_bw, adjust_max_power, adjust_rx_bw,];
```

```
//Intial read of UE/BB/RFFE lifetime etimate and expectations
[RFSS_lifetime_estimate, BB_lifetime_estimate] =
lifetime_estimate_NN_read_output(UE1);
  [RFSS_expected, BB_expected] = get_expected_RFSS_BB_values(UE1);
  while (1) // start control loop
        if(RFSS_lifetime _estimate < T_RFSSmin && BB_lifetime_estimate < T_UE2) // critical
  condition – need to disable UL/DL
            UE1_uplink = check_ul_availability(UE1); // check whether failure is in the UL
  components
            UE1_downlink = check_dl_availability(UE1); // check whether failure is in the DL
  components
            UE1_reported_capabilities = make_adjustments(UE1_reported_capabilities,
                                                         UE1_uplink,
                                                         UE1_downlink); // set new
  reported capabilities to be no UL/DL
        else //non critical condition only requiring capability changes
            if( RFSS_lifetime _estimate < RFSS_expected) //non critical condition with RFSS –
  adjustment required
                if(BB_lifetime_estimate < BB_expected) // both RFSS and BB needs adjustment
                    if(RFSS_lifetime_estimate < BB_lifetime_estimate) //but we should prioritize
  RFSS changes first
                        UE1_reported_capabilities = make_adjustments(UE1_reported_capabilities,

  RFSS_lifetime_adjustment_priorities);
                    else //otherwise feel free to prioritise BB adjustments
                        UE1_reported_capabilities = make_adjustments(UE1_reported_capabilities,

  BB_lifetime_adjustment_priorities);
                    endif
                else // if no BB problems, then just make RFSS adjustments
                    UE1_reported_capabilities = make_adjustments(UE1_reported_capabilities,

  RFSS_lifetime_adjustment_priorities);
                endif
            elseif( BB_lifetime _estimate < BB_expected) //non critical condition with UE –
  adjustment required
                if(RFSS_lifetime_estimate < RFSS_expected) // both UE and RFSS needs
  adjustment
                    if(BB_lifetime_estimate < RFSS_lifetime_estimate) //but we should prioritise UE
  changes first
                        UE1_reported_capabilities = make_adjustments(UE1_reported_capabilities,

  BB_lifetime_adjustment_priorities);
                    else //otherwise feel free to prioritise RFSS adjustments
```

```
                    UE1_reported_capabilities = make_adjustments(UE1_reported_capabilities,

        RFSS_lifetime_adjustment_priorities);
                endif
            else // if no RFSS problems, then just make UE adjustments
                    UE1_reported_capabilities = make_adjustments(UE1_reported_capabilities,

        BB_lifetime_adjustment_priorities);
                endif
            endif
        else
            // do nothing because nothing is failing
        endif

            //Read UE1 lifetime estimates (and potentially expected values) again when available
            [RFSS_lifetime_estimate, BB_lifetime_estimate] = await
        lifetime_estimate_NN_read_output(UE1);
            [RFSS_expected, BB_expected] = await update_expected_RFSS_BB_values(UE1); //
        this will only be queried if not a fixed value
        end while
```

**Table 1**

In one example embodiment, actions or measures in the device 101 to extend lifetimes can be regarded as measurements. Accordingly, upon taking the measures or actions described herein, the UE 107 can report the measures taken to the NW (e.g., to the device health platform 113). In response to the report, the NW can take corresponding actions to further extend the lifetime of the UE 107, device 101, and/or components thereof. Example of such actions include but are not limited to be assigning the control information to an UL enabled UE, such that the DL only UE may be used, e.g., for signaling only (e.g., no data), monitoring network availability in the device (e.g., so that other UE 107's have that information before selecting a NW as a service to the CM entity 501).

In one example embodiment, the health device platform 113 can then collect information on lifetime extending measures taken by a population of similar devices. Based on this collected information, the health device platform 113 can create statistics and/or train the ML models 117 to provide better lifetime estimates for the devices 101, UEs 107, components included therein, and/or any other component/system of the communications network 103.

As discussed above, one example measure, correction action, or adjustment is to reduce the reported maximum Tx power and/or provide a downlink only in the IoT device 101 or UE 107. As part of this adjustment, the reported maximum Tx power can be reduced progressively (via the adjustment module 207 or equivalent). After the Tx power minimum threshold is reached for the UE 107 belonging to a multi-UE device 101, the UE 107 reaching the minimum threshold can be used for downlink only if availability requirement allows, closed or abandoned.

In one example embodiment, the correction actions, adjustments, measures, etc. can include UE, IoT device and/or network device lifetime extension measures. For example, when the UE or device lifetime estimate (e.g., estimated time to failure of the UE 107 IoT device 101 and/or network device 109) goes below $T_{UE1}$, the CM entity 501 can trigger the one or more measures/actions/adjustments for example on the List 3 to extend the UE 107's, IoT device 101's and/or network device 109's lifetime, e.g., through its control interface (e.g. AT commands or other proprietary interface). Additional measures/actions/adjustments can be:

- Reduce the reported maximum Tx power;

- Reduce the usage of device and shift the availability requirement to other device in a multi-UE device 101;

- Induce measures to reduce frequency of write operations to the flash memory; and

- Report to limit device capabilities such as but not limited to number of supported MIMO layers, numbers of aggregated DL and/or UL carriers,
etc.

When the device lifetime estimate goes further below $T_{UE2}$, the CM entity 501 can trigger further measures/actions/adjustment such as, but not limited to:

- Use the device only in case the availability requirement is not satisfied with the remaining devices in the multi-UE device 101.

It is noted that the device-base measures described above are provided by way of illustration and not as limitations. It is contemplated that the measures can include any correction action or adjustments made to any one or more functions or features of the IoT devices 101, UEs 107 and or network devices 109 that can result in extending the estimated lifetime of a subsystem (e.g., RF-SS) of the IoT device 101, UE 107 and/or network device 109 or extending the estimated time to failure of the device 101, UE 107 and/or network device 109 as a whole.
In addition or as an alternative to device-based implementations, NW-based implementations of correction actions, adjustments, etc. to extend the device or device subsystem lifetime can be used. For example, the communication network (e.g., cellular communication network 103) can implement one or more counter measures/actions/adjustments to compensate for poor device or component health (e.g. bad RF performance on the device 101, UE 107) based on feedback from the UE 107. Once the DHAF entity 505 knows the device health estimates (e.g., lifetime estimates for a UE 107) from the LEC entity 503, the DHAF entity 505 can progressively move usage/bandwidth between UEs of a multi-UE device as the estimated lifetime of one or more UEs of the multi-UE device decreases. More specifically, if the DHAF entity 505 knows that a certain device 101 has co-existing UEs, UE_1, UE_2 ... UE_N, and let's say UE_1 has bad health, then the DHAF entity 505 can also move the usage/bandwidth from UE_1 (e.g., with bad health) to one or more of the other UEs of the device 101 (e.g., UE_2 ... UE_N). The DHAF entity 505 can obtain the information about co-existing UEs from either the LEC entity 503 or from some other equivalent means. In one example embodiment, the data or parameters for moving of the usage/bandwidth between UEs of the multi-UE device 101 is sent over the N5 interface to the PCF 509, which sends it further to the RAN 511 via AMF 513 over the N15 and N2 interfaces, as a new policy.
In one embodiment the threshold scheduler in the RAN 511 can perform the moving of the usage/bandwidth from the UE with bad health by allocating more bandwidth or a higher MCS to other UEs (e.g., UEs without bad health or with better health) of the multi-UE device or scheduling sidelinks if possible.
In addition or alternatively, the data or parameters for moving usage/bandwidth is sent to the PCF 509 which relays it to the RAN 511 as a new policy. This policy is used by the RAN 511 to allow other UEs 107 in the device 101 to be allocated more usage/bandwidth than the normally targeted usage/bandwidth.
In addition or as an alternative to device-based implementations, NW-based implementations of correction actions, adjustments, etc. to extend the device or device subsystem lifetime can be used. For example, the communication network (e.g., cellular communication network 103) can implement one or more counter measures/actions/adjustments to compensate for e.g. bad RF performance on the device 101, UE 107, and/or network device 109. Once the DHAF entity 505 knows the device health estimates (e.g., RF-SS or RFFE lifetime estimates for a UE 107) from the LEC entity 503, the DHAF entity 505 can progressively reduce the maximum transmit power as the estimated lifetime decreases. Furthermore, if the DHAF entity 505 knows that a certain device 101 has co-existing UEs, UE_1, UE_2 ... UE_N, and let's say UE_1 has bad health, then the DHAF entity 505 can also increase the power allocated to other UEs in the device to compensate for reduced max transmit power of UE_1. The DHAF entity 505 can obtain the information about co-existing UEs from either the LEC entity 503 or from some other equivalent means.
This NW-originated measure of the threshold scheduler (e.g., NW-originated actions/adjustments based on UE feedback) is illustrated in the pseudocode of Table 2 below:

```
UE1_txpower_health_comp_offset = 0;
increment = vendor_specific_value;
coexisting_UEs_vector = get_coexisting_UEs(UE1);

for threshold in [TRFFE1, TRFFE2 ... TRFFEN,TRFFEmin]
        if (RFFE_estimate < threshold)
                UE1_txpower_health_comp_offset =
                UE1_txpower_health_comp_offset + increment;
        else
                break;
        endif
end

for UE in coexisting_UEs_vector
        if(UE ≠ UE1)
                UE_extra_tx_power[UE] =
                UE1_txpower_health_comp_offset / (num_coexisting_UE-
                1);
        endif
end
```

**Table 2**

In one example embodiment, the computed "UE1_txpower_health_comp_offset" is sent over the N5 interface to the PCF 509, which sends it further to the RAN 511 via AMF 513 over the N15 and N2 interfaces, as a new policy. This offset is subtracted from the maximum transmit power reported by the UE 107 and the threshold scheduler in the RAN 511 uses that as the new UE maximum transmit power as indicated below:

$$UE1\_max\_tx\_power = UE1\_reported\_max\_tx\_power - UE1\_txpower\_health\_comp\_offset$$

In one embodiment the threshold scheduler in the RAN 511 can compensate for the reduced transmit power by, for example, allocating more resources (e.g., using a lower Modulation and Coding Scheme (MCS)) or scheduling sidelinks if possible.

Similarly, the "UE_extra_tx_power" is sent to the PCF 509 which relays it to the RAN 511 as a new policy. This policy is used by the RAN 511 to allow other UEs 107 in the device 101 to transmit at higher Tx power than the normally targeted Tx power. In one embodiment, this can be done when UE1 reaches "UE1_max_tx_power".

Although the various example embodiments described above determine correction actions, adjustments, and measures heuristically (e.g., based on the multiple thresholds), it is contemplated that the correction actions, adjustments, etc. to extend the life of a monitored device can also be determined using one or more ML models 117 or equivalent prediction algorithms. For example, the monitored health data 111 used for estimating device (e.g. 101, 107 and/or 109) health can be used an input features in combination with the device health estimates, communications network parameters (e.g., availability of alternate UEs 107 or devices 101; configuration of base stations 109 or other network components, and/or the like), into the prediction algorithm or the one or more ML models 117 to train the one or more model to predict the one or more correction actions or adjustments to device functions that are likely to lead to extending the device's lifetime beyond the lifetimes indicated in the device health estimates. In one example embodiment, the prediction by the one or more ML models 117 can be made with respect to the amount of time that the device lifetime is to be extended. For example, the one or more ML models 117 can be used to predict the one or more actions that can extend a device or subsystem lifetime by 1 month, 2 months, 3 months, and/or any other specified one or more periods of time.

In other words, in one example embodiment, the adjustment module 207 of the device health platform 113 can determine an adjustment of at least one function or parameter of the at least one device, at least one other device that interacts with the at least one device, or a combination thereof based on the estimated lifetime, the estimated time to failure, or a combination thereof using, e.g., heuristic-based (e.g., threshold-based) or learning-based (e.g., ML model 117) approaches. The adjustment or correction action can then be initiated at the at least one device (e.g., the monitored IoT device 101 or UE 107), at least one other device (e.g., monitored base station 109 or other network device) that interacts with the monitored device, or a combination thereof based on determining that the estimated lifetime is less than an expected lifetime of the at least one device, a scheduled maintenance time of the at least one device, or a combination thereof. For example, the output module 205 of the device health platform 113 can transmit data indicating the adjustment to the monitored device, the other interacting device, or a combination therefore for implementation. Alternatively, the output module 205 can transmit the device health estimate to the monitored device or other interacting device, so that the corresponding adjustments or correction actions can be determined locally at the devices. The expected lifetime of the at least device can be a fix value or value range given and/or determined by a device manufacturer based on the features of the device and features of operating environment. The scheduled maintenance time of the at least device can be a fix value or value range given and/or determined by a device manufacturer and/or a maintenance organization based on the features of the device and features of operating environment.

In one example embodiment, the device health estimation output of the device health platform 113 can be used in a control and monitor based implementation. For example, alarms, alert messages, or equivalent can be raised to the administrator about UEs 107 or devices 101 with device health estimates below $T_{RFFEmin}$ and/or $T_{UE1}$ in the Control & Monitor module 507 of the LEC entity 503. Administrators can then schedule replacement of UE 107s at a next possible occasion, shift them to lesser demanding applications or less harsh environment, or take correction actions/adjustments to extend the lifetime of the UEs 107 or devices 101.

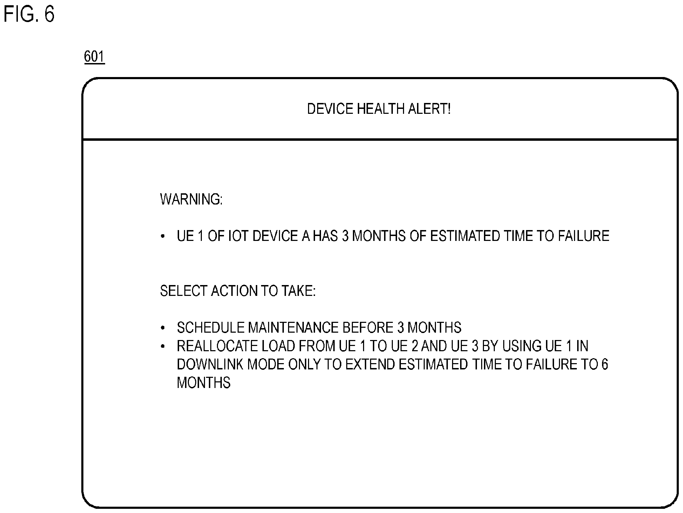

FIG. 6 illustrates an example user interface 601 for presenting an alert based on a heath estimate generated according to the embodiments described herein. In the example of FIG. 6, the device health platform 113 has monitored and collected health parameter measurements from IoT Device A (e.g., a multi-UE device with UE 1, UE 2, and UE 3). The health estimate based on the monitored parameters indicates that UE 1 has an estimated time to complete failure of 3 months. The device health platform 113 can then provide options of correction actions that can be taken based on the device health estimate. As shown, the determined options include: (1) scheduling maintenance or service of the IoT Device A before the end of the estimated time to failure (e.g., 3 months); and (2) reallocating the communications load so that the UE 1 is configured to operate in a downlink mode only while its previous transmission load reallocated to UEs 1 and 2 of the device to extend the estimated time to failure of UE 1 to 6 months. In one embodiment, an administrator can interact with the user interface 601 to select from among the options to initiate the corresponding actions. In other words, the monitored device can be a multiple UE device, and the device health estimate (e.g., estimated subsystem lifetime and/or device time to failure) is associated with a first UE of the multiple UE device. The adjustment can then comprise using a second UE of the multiple UE device in place of (e.g., by stopping the use of the affected UE) or partially in place of the first UE (e.g., by using the UE in a downlink only mode or other partial use mode).

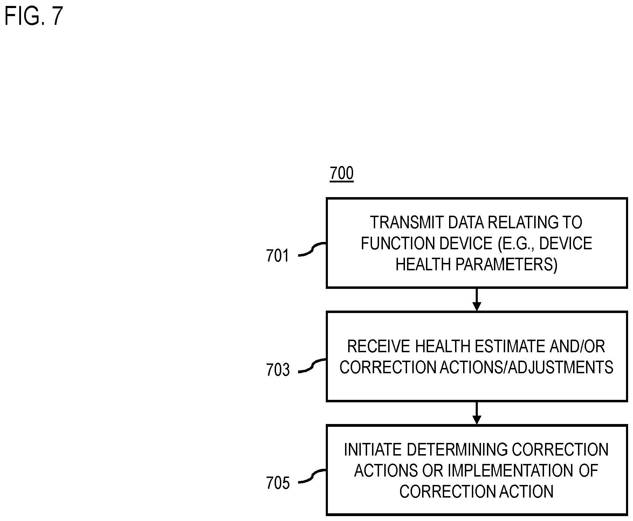

FIG. 7 is a flowchart of a summarizing the approach for determining a device health estimation and/or a correction action from the device perspective, according to one embodiment. In various embodiments, the device 101, UE 107, network device 109 or a component thereof (e.g., CM entity 501) may perform one or more portions of the process 700 and may be implemented in, for instance, a chip set or circuitry including one or more processors and one or more memories as shown in FIG. 10. As such, the device 101, UE 107, network device 109 and/or CM entity 501 can provide means for accomplishing various parts of the process 700, as well as means for accomplishing embodiments of other processes described herein in conjunction with other components of the system 100 or 500. Although the process 700 is illustrated and described as a sequence of steps, its contemplated that various embodiments of the process 700 may be performed in any order or combination and need not include all of the illustrated steps.

In step 701, the CM entity 501 of a device 101, UE 107 and/or network device 109 transmits data relating to at least one function of the device 101, UE 107 and/or network device 109. The data, for instance, includes health parameter measurements made according to the example embodiments described above. In one example embodiment, the data is transmitted to an external component (e.g., the LEC entity 503) to perform an analysis on the data using one or more machine learning models 117 to predict an estimated lifetime of the apparatus or at least one subsystem (e.g., an RF-SS) of the apparatus, an estimated time to failure of the apparatus, or a combination thereof. Alternatively, the CM entity 501 can download one or more trained ML models 117 from the LEC entity 503 to perform the analysis to estimate the heath (e.g., lifetime values) of the device 101, UE 107, and/or network device 109.

In step 703, the CM entity 501 receives the device health estimates (e.g., the estimated lifetime of the device 101, UE 107 and/or network device 109, or a subsystem of the device 101, UE 107 and/or network device 109, the estimated time to failure of the device 101, UE 107 and/or network device 109 as a whole, or a combination thereof) from either the external component (e.g., the LEC entity 503 or the locally installed one or more ML models 117). In addition or alternatively, the CM entity 501 can receive data indicating one or more correction actions/adjustments (and associated thresholds for implementing the correction action) based on the device health estimates.

In step 705, the CM entity 501 can then initiate the received one or more correction actions/adjustments (e.g.,

based on threshold requirements if provided) at the device 101 to extend the lifetime of the device 101, UE 107, and/or a subsystem thereof. In one example embodiment, if the CM entity 501 receives data indicating the device health estimates, the CM entity can locally determine the one or more correction actions or adjustments to perform and then initiate the action. As discussed in the embodiments above, the CM entity 501 can use one or more ML models 117 that has been trained to predict or recommend one or more correction actions/adjustments based on input one or more features such as, but not limited to, device health data 111, device health estimates, lifetime estimates, network characteristics or features, and/or any other feature of the communications network 103 that can affect the performance or lifetime of the device 101, UE 107, network device 109 and/or its subsystems over a period of time.

In one example embodiment, the initiation of the correction actions/adjustments can be based on establishing predefined thresholds for the device 101 or UE 107 as discussed in the embodiments described with respect to FIG. 5. For example, when any part of the UE1 (UE2, ..., UEn for multi-UE devices) lifetime estimate goes below a predefined threshold, $T_{UE1}$, the CM entity 501 can trigger measures to extend the UE's lifetime. Examples of such measures that include but are not limited to: (1) reducing the maximum bandwidth in both uplink and downlink in order to reduce the load on the UE with bad health; and/or (2) reducing the reported maximum Tx power by the UE.

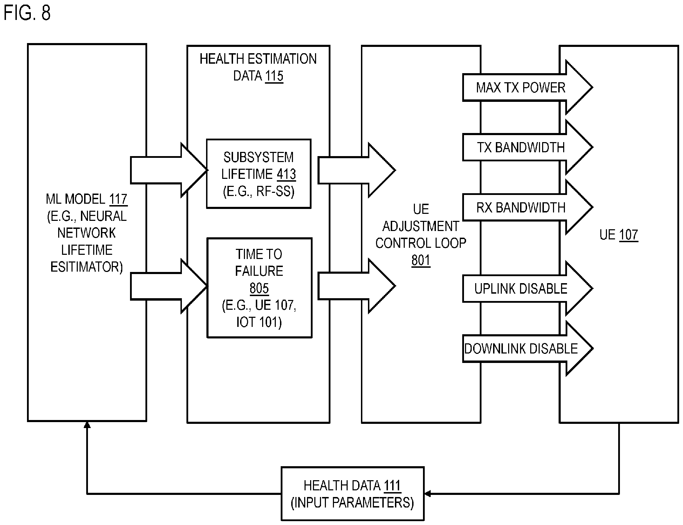

In one example embodiment, as shown in FIG. 8, the corrective actions/adjustments to the UE capabilities (e.g., usage/bandwidth, reported maximum Tx power, etc.) can be performed iteratively until the lifetime estimates are greater than or equal to the expected lifetime (e.g., pre-configured by the vendor or dynamically updated) or other lifetime threshold value. For example, a UE adjustment control loop 801 interacts with one or more ML Models 117 (e.g., Neural Network Lifetime Estimator) to receive health estimation data 115 (e.g., subsystem or RF-SS lifetime estimate 803, UE or device lifetime estimate/time to failure 805, etc.) for a monitored UE 107. If the health estimate of the UE 107 and/or any of its components/subsystems is below the expected lifetime or other designated lifetime threshold value, the UE adjustment control loop 801 can then select one or more corrective actions (e.g., reduced the reported maximum TX power, reduced Tx and/or Rx bandwidth, disable uplink and/or downlink) to extend the lifetime of the UE 107.

After implementing the selected corrective actions/adjustments, the UE 107 can report updated health measurement data 111 as input parameters to the ML Model 117 (e.g., Neural Network Lifetime Estimator) to determine an updated lifetime estimate for the UE 107. The updated lifetime estimate is provided to the UE adjustment control loop 801 to determine whether additional corrective actions/adjustments. For example, if the updated lifetime estimate is still below the expected lifetime or other designated lifetime threshold, the UE adjustment control loop 801 can select and initiate additional actions/adjustments to extend the lifetime of the UE 107. This process can then be repeated until the updated lifetime estimate of the UE 107 is greater than or equal to the expected lifetime or other designated lifetime threshold.

The processes described herein for providing device health estimation may be advantageously implemented via one or more circuitry, software, hardware (e.g., general processor, circuitry, Digital Signal Processing (DSP) chip, an Application Specific Integrated Circuit (ASIC), Field Programmable Gate Arrays (FPGAs), etc.), firmware or a combination thereof. Such exemplary hardware for performing the described functions is detailed below. As used in this application, the term "circuitry" may refer to one or more or all of the following:

(a) hardware-only circuit implementations (such as implementations in only analog and/or digital circuitry) and

(b) combinations of hardware circuits and software, such as (as applicable):

(i) a combination of analog and/or digital hardware circuit(s) with software/firmware and

(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device. Such exemplary hardware for performing the described functions is detailed below.

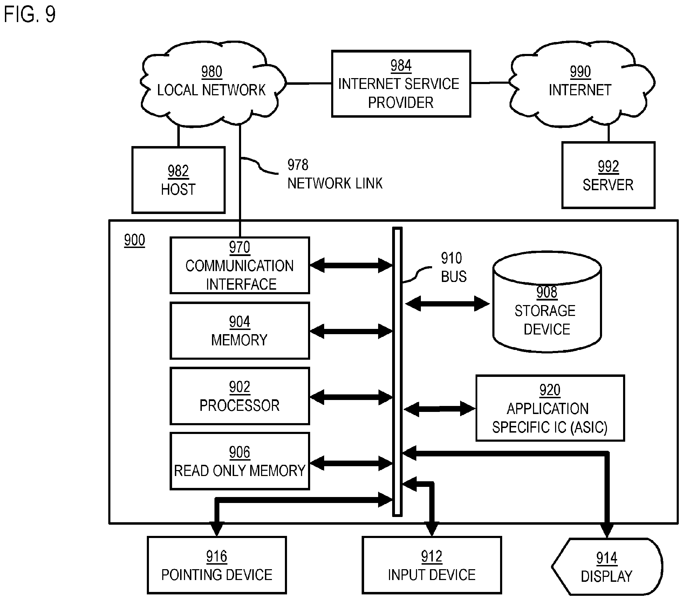

FIG. 9 illustrates a computer system 900 upon which an example embodiment of the invention may be implemented. Further, FIG. 9 describes various HW components which have functions that can be measured, health estimated and/or corrected/adjusted as described in the various example embodiments of the invention. Computer system 900 is programmed (e.g., via computer program code or instructions) to provide device health estimation as described herein and includes a communication mechanism such as a bus 910 for passing information between other internal and external components of the computer system 900. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range.

A bus 910 includes one or more parallel conductors of information so that information is transferred quickly among devices coupled to the bus 910. One or more processors 902 for processing information are coupled with the bus 910.

A processor 902 performs a set of operations on information as specified by computer program code related to providing device health estimation. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 910 and placing information on the bus 910. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 902, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 900 also includes a memory 904 coupled to bus 910. The memory 904, such as a random access memory (RAM) or other dynamic storage device, stores information including processor instructions for providing device health estimation. Dynamic memory allows information stored therein to be changed by the computer system 900. RAM allows a unit of information stored at a location called a memory address to be stored and retrieved independently of information at neighboring addresses. The memory 904 is also used by the processor 902 to store temporary values during execution of processor instructions. The computer system 900 also includes a read only memory (ROM) 906 or other static storage device coupled to the bus 910 for storing static information, including instructions, that is not changed by the computer system 900. Some memory is composed of volatile storage that loses the information stored thereon when power is lost. Also coupled to bus 910 is a non-volatile (persistent) storage device 908, such as a magnetic disk, optical disk or flash card, for storing information, including instructions, that persists even when the computer system 900 is turned off or otherwise loses power.

Information, including instructions for providing device health estimation, is provided to the bus 910 for use by the processor from an external input device 912, such as a keyboard containing alphanumeric keys operated by a human user, or a sensor. A sensor detects conditions in its vicinity and transforms those detections into physical expression compatible with the measurable phenomenon used to represent information in computer system 900. Other external devices coupled to bus 910, used primarily for interacting with humans, include a display device 914, such as a cathode ray tube (CRT) or a liquid crystal display (LCD), or plasma screen or printer for presenting text or images, and a pointing device 916, such as a mouse or a trackball or cursor direction keys, or motion sensor, for controlling a position of a small cursor image presented on the display 914 and issuing commands associated with graphical elements presented on the display 914. In some embodiments, for example, in embodiments in which the computer system 900 performs all functions automatically without human input, one or more of external input device 912, display device 914 and pointing device 916 is omitted.

In the illustrated embodiment, special purpose hardware, such as an application specific integrated circuit (ASIC) 920, is coupled to bus 910. The special purpose hardware is configured to perform operations not performed by processor 902 quickly enough for special purposes. Examples of application specific ICs include graphics accelerator cards for generating images for display 914, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 900 also includes one or more instances of a communications interface 970 coupled to bus 910. Communication interface 970 provides a one-way or two-way communication coupling to a variety of external devices that operate with their own processors, such as printers, scanners and external disks. In general, the coupling is with a network link 978 that is connected to a local network 980 to which a variety of external devices with their own processors are connected. For example, communication interface 970 may be a parallel port or a serial port or a universal serial bus (USB) port on a personal computer. In some embodiments, communications interface 970 is an integrated services digital network (ISDN) card or a digital subscriber line (DSL) card or a telephone modem that provides an information communication connection to a corresponding type of telephone line. In some embodiments, a communication interface 970 is a cable modem that converts signals on bus 910 into signals for a communication connection over a coaxial cable or into optical signals for a communication connection over a fiber optic cable. As another example, communications interface 970 may be a local area network (LAN) card to provide a data communication connection to a compatible LAN, such as Ethernet. Wireless links may also be implemented. For wireless links, the communications interface 970 sends or receives or both sends and receives electrical, acoustic or electromagnetic signals, including infrared and optical signals, that carry information streams, such as digital data. For example, in wireless handheld devices, such as mobile telephones like cell phones, the communications interface 970 includes a radio band electromagnetic transmitter and receiver called a radio transceiver. In certain embodiments, the communications interface 970 enables connection to the communications network 103 for providing device health estimation.

The term computer-readable medium is used herein to refer to any medium that participates in providing information to processor 902, including instructions for execution. Such a medium may take many forms, including, but not limited to, non-volatile media, volatile media and transmission media. Non-volatile media include, for example, optical or magnetic disks, such as storage device 908. Volatile media include, for example, dynamic memory 904. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, any other memory chip or cartridge, a carrier wave, or any other medium from which a computer can read.

Network link 978 typically provides information communication using transmission media through one or more networks to other devices that use or process the information. For example, network link 978 may provide a connection through local network 980 to a host computer 982 or to equipment 984 operated by an Internet Service Provider (ISP). ISP equipment 984 in turn provides data communication services through the public, world-wide packet-switching communications network of networks now commonly referred to as the Internet 990.

A computer called a server host 992 connected to the Internet hosts a process that provides a service in response to information received over the Internet. For example, server host 992 hosts a process that provides information representing video data for presentation at display 914. It is contemplated that the components of system can be deployed in various configurations within other computer systems, e.g., host 982 and server 992.

FIG. 10 illustrates a chip set 1000 upon which an embodiment of the invention may be implemented. Further, FIG. 10 describes various HW components which have functions that can be measured, health estimated and/or corrected/adjusted as described in the various example embodiments of the invention. Chip set 1000 is programmed to provide device health estimation as described herein and includes, for instance, the processor and memory components described with respect to FIG. 9 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set can be implemented in a single chip.

In one embodiment, the chip set 1000 includes a communication mechanism such as a bus 1001 for passing information among the components of the chip set 1000. A processor 1003 has connectivity to the bus 1001 to execute instructions and process information stored in, for example, a memory 1005. The processor 1003 may include one or more processing cores with each core configured to perform independently. A multi-core processor enables multiprocessing within a single physical package. Examples of a multi-core processor include two, four, eight, or greater numbers of processing cores. Alternatively or in addition, the processor 1003 may include one or more microprocessors configured in tandem via the bus 1001 to enable independent execution of instructions, pipelining, and multithreading. The processor 1003 may also be accompanied with one or more specialized components to perform certain processing functions and tasks such as one or more digital signal processors (DSP) 1007, or one or more application-specific integrated circuits (ASIC) 1009. A DSP 1007 typically is configured to process real-world signals (e.g., sound) in real time independently of the processor 1003. Similarly, an ASIC 1009 can be configured to performed specialized functions not easily performed by a general purposed processor. Other specialized components to aid in performing the inventive functions described herein include one or more field programmable gate arrays (FPGA) (not shown), one or more controllers (not shown), or one or more other special-purpose computer chips.

The processor 1003 and accompanying components have connectivity to the memory 1005 via the bus 1001. The memory 1005 includes both dynamic memory (e.g., RAM, magnetic disk, writable optical disk, etc.) and static memory (e.g., ROM, CD-ROM, etc.) for storing executable instructions that when executed perform the inventive steps described herein to provide device health estimation. The memory 1005 also stores the data associated with or generated by the execution of the inventive steps.

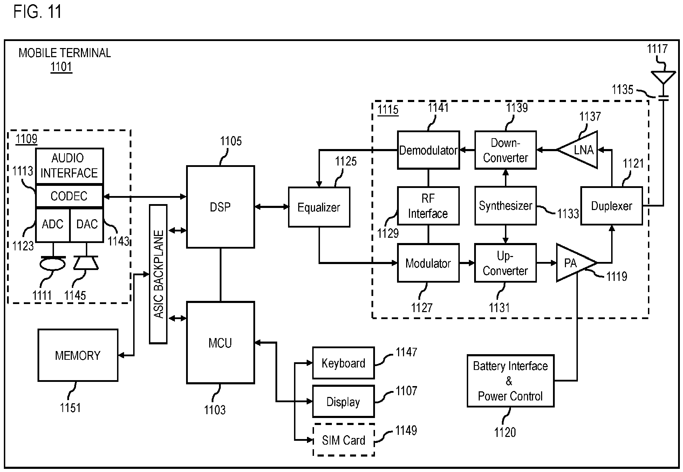

FIG. 11 is a diagram of exemplary components of an IoT device, UE device, or mobile terminal or mobile communication device (e.g., handset) capable of operating in the system of FIG. 1, according to one example embodiment. Further, FIG. 11 describes various HW components which have functions that can be measured, health estimated and/or corrected/adjusted as described in the various example embodiments of the invention A radio receiver is often defined in terms of front-end and back-end characteristics. The front-end of the receiver encompasses all of the Radio Frequency (RF) circuitry whereas the back-end encompasses all of the base-band processing circuitry. Pertinent internal components of the telephone include a Main Control Unit (MCU) 1103, a Digital Signal Processor (DSP) 1105, and a receiver/transmitter unit including a microphone gain control unit and a speaker gain control unit. A main display unit 1107 provides a display to the user in support of various applications and mobile station functions that offer automatic contact matching. An audio function circuitry 1109 includes a microphone 1111 and microphone amplifier that amplifies the speech signal output from the microphone 1111. The amplified speech signal output from the microphone 1111 is fed to a coder/decoder (CODEC) 1113.

A radio section 1115 amplifies power and converts frequency in order to communicate with a base station, which is included in a mobile communication system, via antenna 1117. The power amplifier (PA) 1119 and the transmitter/modulation circuitry are operationally responsive to the MCU 1103, with an output from the PA 1119 coupled to the duplexer 1121 or circulator or antenna switch. The PA 1119 also couples to a battery interface and power control unit 1120.

In use, a user of mobile station 1101 speaks into the microphone 1111 and his or her voice along with any detected background noise is converted into an analog voltage. The analog voltage is then converted into a digital signal through the Analog to Digital Converter (ADC) 1123. The control unit 1103 routes the digital signal into the DSP 1105 for processing therein, such as speech encoding, channel encoding, encrypting, and interleaving. In one embodiment, the processed voice signals are encoded, by units not separately shown, using a cellular transmission protocol such as global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, code division multiple access (CDMA), wireless fidelity (WiFi), satellite, and the like.

The encoded signals are then routed to an equalizer 1125 for compensation of any frequency-dependent impairments that occur during transmission though the air such as phase and amplitude distortion. After equalizing the bit stream, the modulator 1127 combines the signal with a RF signal generated in the RF interface 1129. The modulator 1127 generates a sine wave by way of frequency or phase modulation. In order to prepare the signal for transmission, an up-converter 1131 combines the sine wave output from the modulator 1127 with another sine wave generated by a synthesizer 1133 to achieve the desired frequency of transmission. The signal is then sent through a PA 1119 to increase the signal to an appropriate power level. In practical systems, the PA 1119 acts as a variable gain amplifier whose gain is controlled by the DSP 1105 from information received from a network base station. The signal is then filtered within the duplexer 1121 and optionally sent to an antenna coupler 1135 to match impedances to provide maximum power transfer. Finally, the signal is transmitted via antenna 1117 to a local base station. An automatic gain control (AGC) can be supplied to control the gain of the final stages of the receiver. The signals may be forwarded from there to a remote telephone which may be another cellular telephone, other mobile phone or a land-line connected to a Public Switched Telephone Network (PSTN), or other telephony networks.

Voice signals transmitted to the mobile station 1101 are received via antenna 1117 and immediately amplified by a low noise amplifier (LNA) 1137. A down-converter 1139 lowers the carrier frequency while the demodulator 1141 strips away the RF leaving only a digital bit stream. The signal then goes through the equalizer 1125 and is processed by the DSP 1105. A Digital to Analog Converter (DAC) 1143 converts the signal and the resulting output is transmitted to the user through the speaker 1145, all under control of a Main Control Unit (MCU) 1103-which can be implemented as a Central Processing Unit (CPU) (not shown).

The MCU 1103 receives various signals including input signals from the keyboard 1147. The keyboard 1147 and/or the MCU 1103 in combination with other user input components (e.g., the microphone 1111) comprise a user interface circuitry for managing user input. The MCU 1103 runs a user interface software to facilitate user control of at least some functions of the mobile station 1101 to provide device health estimation. The MCU 1103 also delivers a display command and a switch command to the display 1107 and to the speech output switching controller, respectively. Further, the MCU 1103 exchanges information with the DSP 1105 and can access an optionally incorporated SIM card 1149 and a memory 1151. In addition, the MCU 1103 executes various control functions required of the station. The DSP 1105 may, depending upon the implementation, perform any of a variety of conventional digital processing functions on the voice signals. Additionally, DSP 1105 determines the background noise level of the local environment from the signals detected by microphone 1111 and sets the gain of microphone 1111 to a level selected to compensate for the natural tendency of the user of the mobile station 1101.

The CODEC 1113 includes the ADC 1123 and DAC 1143. The memory 1151 stores various data including call incoming tone data and is capable of storing other data including music data received via, e.g., the global Internet. The software module could reside in RAM memory, flash memory, registers, or any other form of writable computer-readable storage medium including non-transitory computer-readable storage medium. For example, the memory device 1151 may be, but not limited to, a single memory, CD, DVD, ROM, RAM, EEPROM, optical storage, or any other non-volatile or non-transitory storage medium capable of storing digital data.

An optionally incorporated SIM card 1149 carries, for instance, important information, such as the cellular phone number, the carrier supplying service, subscription details, and security information. The SIM card 1149 serves primarily to identify the mobile station 1101 on a radio network. The card 1149 also contains a memory for storing a personal telephone number registry, text messages, and user specific mobile station settings.

While the invention has been described in connection with a number of embodiments and implementations, the invention is not so limited but covers various obvious modifications and equivalent arrangements, which fall within the purview of the appended claims. Although features of the invention are expressed in certain combinations among the claims, it is contemplated that these features can be arranged in any combination and order.

## Claims

1. An apparatus comprising means for:

   monitoring one or more health parameter measurements associated with at least one device;
   processing the one or more health parameter measurements using at least one machine learning model to predict an estimated lifetime of at least one radio frequency subsystem (RF-SS) of the at least one device, an estimated time to failure of the at least one device based on the estimated lifetime, or a combination thereof; and
   providing the estimated lifetime, the estimated time to failure, or a combination thereof as an output.

2. The apparatus of claim 1, wherein the means are further configured to perform:

   taking the one or more health parameter measurements, at least in part, from one or more crystal oscillators, one or more power amplifiers (PAs), one or more low noise amplifiers (LNAs), one or more surface acoustic wave (SAW) filters, one or more mixers, one or more frontend switches, one or more baluns, one or more voltage controlled oscillators (VCOs), one or more baseband processors, or a combination thereof of the radio frequency subsystem (RF-SS); and
   determining an adjustment of at least one function of the at least one device, at least one other device that interacts with the at least one device, or a combination thereof based on the estimated lifetime, the estimated time to failure, or a combination thereof.

3. The apparatus of claim 2, wherein the adjustment is initiated at the at least one device, the at least one other device, or a combination thereof based on at least one of:

   determining that the estimated lifetime is less than an expected lifetime of the at least one device, a scheduled maintenance time of the at least one device, or a combination thereof;
   or
   determining that the estimated time to failure is less than a threshold.

4. The apparatus of claim 2, wherein the means are further configured to perform:
   transmitting data indicating the adjustment to the at least one device, the at least one other device, or a combination thereof.

5. The apparatus of claim 2, wherein the means are further configured to perform:

   initiating the adjustment via, at least in part, limiting at least one voltage level in the one or more PAs, the one or more LNAs, or a combination thereof, limiting at least one temperature level in an environment of the one or more PAs, the one or more LNAs, or a combination thereof, limiting at least one radio frequency power level in the one or more SAW filers, reducing at least one power requirement for running the baseband processor at a reduced clock-rate, or a combination thereof,

wherein the adjustment extends a lifetime of the RF-SS.

6. The apparatus of claim 5, wherein the adjustment of the at least one function of the at least one device comprises at least one of:

reducing a maximum reported transmission power at the at least device based on the estimated lifetime of the RF-SS; or

performing at least one action based on the estimated time to failure.

7. The apparatus of any of claims 2 to 5, wherein the adjustment of the at least one function of the at least one other device comprises at least one of:

initiating a reduction of a target transmission power based on the estimated lifetime of the RF-SS; or

initiating a reallocation of reduced target transmission power.

8. The apparatus of claim 2, wherein the at least one device is a multiple user equipment (UE) device and the estimated lifetime or the estimated time to failure is associated with a first UE of the multiple UE device; and wherein the adjustment comprises using a second UE of the multiple UE device in place of or partially in place of the first UE.

9. The apparatus of claim 2, wherein the adjustment is determined using at least one other machine learning model.

10. The apparatus of any preceding claim, wherein the means are further configured to perform:

transmitting the output to the at least one device, another device incorporating the at least one device, or a combination thereof,

wherein the one or more health parameter measurements include at least one crystal aging related frequency drift, at least one error vector magnitude of a transmission chain at maximum transmit power, at least one bit error rate or block error rate of a reception chain, at least one ripple in transient voltage when a power amplifier, a baseband processor, or a combination thereof are turned on at full power, at least one gain loss in the power amplifier or a low noise amplifier, at least one increased insertion loss of a surface acoustic wave filter, or a combination thereof.

11. The apparatus of any preceding claim wherein the means comprises:

at least one processor; and

at least one memory including computer program code, the at least one memory and computer program code configured to, with the at least one processor, cause the performance of the apparatus.

12. A method comprising:

monitoring one or more health parameter measurements associated with at least one device;

processing the one or more health parameter measurements using at least one machine learning model to predict an estimated lifetime of at least one radio frequency subsystem (RF-SS) of the at least one device, an estimated time to failure of the at least one device based on the estimated lifetime, or a combination thereof; and

providing the estimated lifetime, the estimated time to failure, or a combination thereof as an output.

13. The method of claim 12, wherein the means are further configured to perform:

taking the one or more health parameter measurements, at least in part, from one or more crystal oscillators, one or more power amplifiers (PAs), one or more low noise amplifiers (LNAs), one or more surface acoustic wave (SAW) filters, one or more mixers, one or more frontend switches, one or more baluns, one or more voltage controlled oscillators (VCOs), one or more baseband processors, or a combination thereof of the RF-SS; and

determining an adjustment of at least one function of the at least one device, at least one other device that interacts with the at least one device, or a combination thereof

**14.** A computer program comprising instructions for causing an apparatus to perform at least the following:

monitoring one or more health parameter measurements associated with at least one device;
processing the one or more health parameter measurements using at least one machine learning model to predict an estimated lifetime of at least one radio frequency subsystem (RF-SS) of the at least one device, an estimated time to failure of the at least one device based on the estimated lifetime, or a combination thereof; and
providing the estimated lifetime, the estimated time to failure, or a combination thereof as an output.

**15.** An apparatus comprising means for :

transmitting data relating to at least one function of the apparatus to perform an analysis on the data using a machine learning model to predict an estimated lifetime of at least one radio frequency subsystem (RF-SS) of the apparatus, an estimated time to failure of the apparatus based on the estimated lifetime, or a combination thereof;
receiving at least one of:

the estimated lifetime, the estimated time to failure, or a combination thereof; or
at least one correction action determined based on the estimated lifetime, the estimated time to failure, or a combination thereof; and

initiatiating at least one of:

a locally determined correction action determined by the apparatus based on the estimated lifetime, the estimated time to failure, or combination thereof; or
the at least one correction action.

FIG. 1

FIG. 2

DEVICE HEALTH PLATFORM 113

MONITORING
MODULE
201

ESTIMATION MODULE
203

OUTPUT MODULE
205

ADJUSTMENT
MODULE
207

FIG. 3

300

MONITOR HEALTH PARAMETER
MEASUREMENTS OF DEVICE

301

PROCESS HEALTH PARAMETERS TO
PREDICT ESTIMATED LIFETIME AND/OR
ESTIMATED TIME TO FAILURE

303

PROVIDE OUTPUT OF HEALTH
ESTIMATES

305

DETERMINE CORRECTION ACTION/
ADJUSTMENT BASED ON HEALTH
ESTIMATES

307

FIG. 4

FIG. 5

500

LIFETIME ESTIMATE, THRESHOLDS
NN DOWNLOAD

HEALTH MEASUREMENTS

CM ENTITY

501a

MULTI-UE DEVICE A

107a

107b

101a

103

5G NETWORK

505

DEVICE HEALTH APPLICATION FUNCTION

109a

gNB

RAN

N2

AMF

N15

PCF

N5

513

509

UE LIFETIME ESTIMATES

111

117

HEALTH PARAMS

NN LIFETIME ESTIMATOR

EDGE CLOUD

LIFETIME ESTIMATION AND CONTROL ENTITY

CONTROL & MONITOR UNIT

507

503

101b

109b

gNB

DEVICE B

107c

511

CM ENTITY

501b

LIFETIME ESTIMATE, THRESHOLDS
NN DOWNLOAD

HEALTH MEASUREMENTS

FIG. 6

601

---

DEVICE HEALTH ALERT!

WARNING:

- UE 1 OF IOT DEVICE A HAS 3 MONTHS OF ESTIMATED TIME TO FAILURE

SELECT ACTION TO TAKE:

- SCHEDULE MAINTENANCE BEFORE 3 MONTHS
- REALLOCATE LOAD FROM UE 1 TO UE 2 AND UE 3 BY USING UE 1 IN DOWNLINK MODE ONLY TO EXTEND ESTIMATED TIME TO FAILURE TO 6 MONTHS

FIG. 7

<u>700</u>

```
┌─────────────────────────────────────┐
│      TRANSMIT DATA RELATING TO       │
│   FUNCTION DEVICE (E.G., DEVICE      │
│        HEALTH PARAMETERS)            │
└─────────────────────────────────────┘
701 ─╮
                    │
                    ▼
┌─────────────────────────────────────┐
│     RECEIVE HEALTH ESTIMATE AND/OR   │
│   CORRECTION ACTIONS/ADJUSTMENTS     │
└─────────────────────────────────────┘
703 ─╮
                    │
                    ▼
┌─────────────────────────────────────┐
│  INITIATE DETERMINING CORRECTION     │
│   ACTIONS OR IMPLEMENTATION OF       │
│        CORRECTION ACTION             │
└─────────────────────────────────────┘
705 ─╮
```

FIG. 8

ML MODEL 117 (E.G., NEURAL NETWORK LIFETIME ESITIMATOR)

HEALTH ESTIMATION DATA 115

SUBSYSTEM LIFETIME 413 (E.G., RF-SS)

TIME TO FAILURE 805 (E.G., UE 107, IOT 101)

UE ADJUSTMENT CONTROL LOOP 801

MAX TX POWER

TX BANDWIDTH

RX BANDWIDTH

UPLINK DISABLE

DOWNLINK DISABLE

UE 107

HEALTH DATA 111 (INPUT PARAMETERS)

FIG. 9

FIG. 10

1000

```
┌──────────────┐   ┌──────────────┐   ┌──────────────┐
│  PROCESSOR   │   │              │   │              │
│     1003     │   │  DSP 1007    │   │  ASIC 1009   │
│              │   │              │   │              │
└──────┬───────┘   └──────┬───────┘   └──────┬───────┘
       ↕                  ↕                  ↕
┌─────────────────────────────────────────────────────┐
│                    BUS 1001                          │
└──────────────────────────┬──────────────────────────┘
                           ↕
              ┌──────────────────────────┐
              │                          │
              │      MEMORY 1005         │
              │                          │
              └──────────────────────────┘
```

FIG. 11

MOBILE TERMINAL
1101

1117

1135

1115   1141        1139        1137

1109

AUDIO
INTERFACE
1113

CODEC

ADC   DAC
1123        1143

1111   1145

1105

DSP

1125

Equalizer

Demodulator   Down-Converter   LNA

RF
Interface

Synthesizer   1133   Duplexer   1121

1129

Modulator   Up-Converter   PA

1127        1131        1119

ASIC BACKPLANE

MEMORY

1151

MCU

1103

Keyboard   1147

Display   1107

SIM Card   1149

Battery Interface
&
Power Control

1120

Europäisches Patentamt

European Patent Office

Office européen des brevets

## EUROPEAN SEARCH REPORT

**Application Number**

EP 21 15 0647

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/036921 A2 (IMPACT TECHNOLOGIES LLC [US]; KALGREN PATRICK [US] ET AL.) 27 March 2008 (2008-03-27) * paragraphs [0008], [0014], [0067], [0070], [0077], [0078], [0087], [0102], [0103], [0129], [0185] * * table 1 * | 1-15 | INV. H04B17/391 H04B17/17 H04B17/10 H04W24/00 G06N3/08 H04L25/02 |
| X A | US 2019/196430 A1 (SEO SUNG MOK [KR] ET AL) 27 June 2019 (2019-06-27) * paragraphs [0111] - [0115] * | 1,11,12, 14,15 2-10,13 | |
| A | RIDDER TYLER D ET AL: "Total reliability of radar systems: incorporating component degradation effects in operational reliability", ENHANCED AND SYNTHETIC VISION 2003 : [CONFERENCE ENHANCED AND SYNTHETIC VISION 2002] ; 21 APRIL 2003, ORLANDO, FLORIDA, USA; [PROCEEDINGS OF SPIE ISSN 0277-786X], SPIE, US, vol. 11003, 3 May 2019 (2019-05-03), pages 110030Y-110030Y, XP060122098, DOI: 10.1117/12.2519725 ISBN: 978-1-5106-3673-6 * Sections 3.1 and 3.2 * | 1-15 | |

**TECHNICAL FIELDS SEARCHED (IPC)**

H04B
H04W
H04L
G06N

The present search report has been drawn up for all claims

| Place of search | Date of completion of the search | Examiner |
|---|---|---|
| The Hague | 28 May 2021 | Ntogari, Georgia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 15 0647

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2021

| Patent document cited in search report | | | Publication date | Patent family member(s) | | | Publication date |
|---|---|---|---|---|---|---|---|
| WO 2008036921 | A2 | | 27-03-2008 | US | 2008141072 | A1 | 12-06-2008 |
| | | | | US | 2012191384 | A1 | 26-07-2012 |
| | | | | WO | 2008036921 | A2 | 27-03-2008 |
| US 2019196430 | A1 | | 27-06-2019 | CN | 110011881 | A | 12-07-2019 |
| | | | | EP | 3669499 | A1 | 24-06-2020 |
| | | | | KR | 20190076534 | A | 02-07-2019 |
| | | | | US | 2019196430 | A1 | 27-06-2019 |
| | | | | WO | 2019124909 | A1 | 27-06-2019 |

EPO FORM P0459

For more details about this annex : see Official Journal of the European Patent Office, No. 12/82